# EUROPÄISCHE PATENTSCHRIFT

(11) **EP 3 701 423 B1**
(45) Veröffentlichungstag und Bekanntmachung des Hinweises auf die Patenterteilung: **13.10.2021**
(21) Anmeldenummer: 18789393.8
(22) Anmeldetag: 17.10.2018
(51) Int. Cl.: G06K 19/077, G06K 19/073, G06K 19/07, G09F 3/03, G09F 3/00, G09F 3/02

(54) **SICHERHEITSETIKETT ZUM NACHWEIS MISSBRÄUCHLICHER MANIPULATIONSVERSUCHE**
SECURITY LABEL FOR DETECTING IMPROPER MANIPULATION ATTEMPTS
ÉTIQUETTE DE SÉCURITÉ PERMETTANT DE DÉCELER UNE TENTATIVE DE MANIPULATION FRAUDULEUSE

(30) Priorität: 27.10.2017 DE 102017125259
(43) Veröffentlichungstag der Anmeldung: 02.09.2020
(73) Patentinhaber: Schreiner Group GmbH & Co. KG, 85764 Oberschleissheim (DE)
(72) Erfinder: KALIO, André, 85579 Neubiberg (DE); GEPP, Sebastian, 01309 Dresden (DE)
(74) Vertreter: Epping - Hermann - Fischer
(86) Internationale Anmeldenummer: PCT/EP2018/078433
(87) Internationale Veröffentlichungsnummer: WO 2019/081310

(56) Entgegenhaltungen:
- AT-A2- 509 904
- US-A1- 2013 299 588
- US-A1- 2014 239 074
- US-A1- 2014 263 659

## Beschreibung

Die Anmeldung betrifft ein Sicherheitsetikett zum Nachweis von missbräuchlichen Manipulationen, insbesondere von unbefugten Ablöseversuchen nach erfolgter Verspendung des Etiketts auf einen Gegenstand. Sicherheitsetiketten, d.h. dem Fälschungsschutz und/oder dem Manipulationsnachweis dienende Etiketten tragen oft sichtbare oder verborgene Sicherheitsmerkmale, die schwierig nachzuahmen sind. Bei vielen Etiketten, die zum Verschließen eines Gegenstandes oder einer Verpackung vor Gebrauch bestimmt sind, dienen solche Sicherheitsmerkmale zugleich als Erstöffnungsnachweis. Aber auch bei Etiketten, die zum dauerhaften Verbleib ohne Öffnungsfunktion an einem Gegenstand bestimmt sind, sind Sicherheitsmerkmale zum Schutz vor Nachahmung, Fälschung oder unbefugter Entfernung und/oder unrechtmäßiger Weiterverwendung, insbesondere Umetikettierung erforderlich.

Die vorliegende Anmeldung betrifft Sicherheitsetiketten, die einen elektronischen Chip, beispielsweise einen RFID-Chip aufweisen. RFID-Etiketten sind beispielsweise aus US2014/263659A1, AT509904A2, US2014/239074A1 oder US2013/299588A1 bekannt und oft auch mit Sicherheitsmerkmalen zum Anzeigen einer erfolgten erstmaligen Öffnung, Umetikettierung oder sonstigen Manipulation oder unbefugten Weiterverwendung versehen. Dennoch ist der erreichte Schutz oft unzureichend oder ggfs. noch weiter verbesserbar.

Es ist die Aufgabe der vorliegenden Anmeldung, ein Sicherheitsetikett bereitzustellen, das nach dem Aufkleben auf einen Gegenstand einen verbesserten Schutz vor missbräuchlichen Ablöseversuchen oder sonstigen Manipulationsversuchen bietet.

Diese Aufgabe wird durch das Sicherheitsetikett gemäß Anspruch 1 gelöst.

Gemäß Anspruch 1 umfasst das Sicherheitsetikett einen zerstörungsanfälligen, gedruckten Schichtenstapel, der zumindest eine aus einem gedruckten Lack bestehende erste Lackschicht und mindestens eine strukturierte, gedruckte Leiterbahnschicht, durch die mindestens eine den Chip elektrisch kontaktierende und/oder kapazitiv und/oder induktiv an den Chip koppelbare Leiterbahn ausgebildet ist, aufweist, wobei der gedruckte Schichtenstapel ein Ablösen des Sicherheitsetiketts von einem damit etikettierten Gegenstand durch eine irreversible, elektrisch nachweisbare Unterbrechung, Beschädigung und/oder Zerstörung der mindestens einen Leiterbahn anzeigt. Gemäß Anspruch 1 besitzt das Sicherheitsetikett einen zerstörungsanfälligen, d.h. leicht zerstörbaren, insbesondere brüchigen, begrenzt reißfesten und/oder begrenzt trennfesten Schichtaufbau, bei dessen Zerstörung oder Beschädigung mit hoher Wahrscheinlichkeit die mindestens eine elektrische Leiterbahn unterbrochen, beschädigt oder zerstört wird. Wird der Chip bzw. RFID-Chip, der einen integrierten Schaltkreis (Integrated Circuit) enthält, beispielsweise durch ein Smartphone oder anderweitig durch Funk etwa im HF-Bereich oder UHF-Bereich (z.B. bei 13,56 MHz oder 868 MHz oder bei sonstigen Frequenzen oder Frequenzbereichen; je nach Anwendungsbereich und/oder Region) angeregt, um ausgelesen zu werden und/oder eine elektrische Messung der Leitfähigkeit des elektrischen Widerstandes oder einer Kapazität durchzuführen, so äußert sich die Beschädigung des Schichtenstapels und der darin befindlichen Leiterbahn durch die Anzeige eines falschen, nicht bestimmungsgemäßen Messwertes oder durch vollständig unterbleibende oder jedenfalls mit der vorgesehenen Übertragungsfrequenz nicht mehr mögliche Übertragung bzw. Rückantwort des Chips. Der Chip ist entweder nicht mehr anregbar oder reagiert nicht oder mit einem unrichtigen Antwortsignal auf die Anregung. Eine missbräuchliche Manipulation zum Ablösen eines bereits verspendeten Etiketts von einem Untergrund ist dadurch elektrisch messbar und durch Ansprechen des Chips über Funk nachweisbar.

Zumindest im überwiegenden Teil seiner Flächenausdehnung besitzt der gedruckte Schichtenstapel bzw. das Sicherheitsetikett über seine Schichtdicke (d.h. zwischen den voneinander abgewandten Außenflächen) einen so brüchigen, zerstörungsanfälligen Schichtaufbau, dass jede weitere Veränderung nach dem erstmaligen Verspenden eine Beschädigung der mindestens einen Leiterbahn herbeiführt. Insbesondere ist das Sicherheitsetikett zwischen seinen voneinander abgewandten Außenflächen als lediglich gedrucktes, d.h. druckschichtbasiertes Etikett ausgebildet. Das Sicherheitsetikett ist insbesondere - zumindest in einem überwiegenden Teilbereich seiner Flächenabmessung - ein folienloses (statt folienbasiertes) und überhaupt als substratloses bzw. substratfreies Etikett ausgebildet. Somit weist das Sichcrhcitsctikctt, auch im vcrspcndctcn Zustand, keine (Kunststoff- oder Papicr-)Folie und kein sonstiges Substrat auf. Insbesondere ist das Sicherheitsetikett insgesamt oder zumindest im überwiegenden Teil seines Flächeninhalts (beispielsweise mindestens 70 %, vorzugsweise mindestens 85 % der Etikettenfläche) substratlos, d.h. als reines Druckschichtetikett ausgebildet. Das Fehlen eines etiketteigenen Substrats (gewöhnlich eine Papier- oder Kunststofffolie), welches auch nach dem Verspenden als integraler Bestandteil des Etiketts an ihm bzw. in ihm verbleibt, macht den gedruckten Schichtenstapel noch zerstörungsanfälliger als bei herkömmlichen, folienbasierten Etiketten, bei denen mindestens eine etiketteigene, integrierte Folie oder ein sonstiges Etikettensubstrat den Großteil aller Zugkräfte, Schwerkräfte und/oder Biegebeanspruchungen aufnimmt und abfängt, die z.B. bei einem Manipulationsversuch zum Wiederablösen des verspendeten Etiketts auftreten können. Dies führt zu einer erheblich gesteigerten Beschädigungswahrscheinlichkeit, mit der die mindestens eine Leiterbahn des gedruckten Schichtenstapels bei unbefugter Manipulation beschädigt wird, d.h. zu einer erheblich gesteigerten Zerstörungsanfälligkeit und damit Nachweiswahrscheinlichkeit für Manipulationsversuche.

Einige exemplarische Ausführungsbeispiele werden nachstehend mit Bezug auf die Figuren beschrieben. Es zeigen:
Figur 1 eine schematische Draufsicht auf eine Ausführungsform eines Sicherheitsetiketts mit einem Chip und mindestens einer Leiterbahn,
Figur 2A eine schematische Querschnittsansicht einer ersten Ausführungsform eines verbesserten Sicherheitsetiketts,
Figur 2B eine schematische Querschnittsansicht eines zum erstmaligen Verspenden konfektionierten Sicherheitsetiketts gemäß Figur 2A,
Figur 3 ein Alternativbeispiel hinsichtlich der Flächenstruktur der Leiterbahnschicht,
Figur 4A ein weiteres Altemativbeispiel hinsichtlich der Flächenstruktur der Leiterbahnschicht,
Figur 4B ein erstes Alternativbeispiel hinsichtlich des Schichtaufbaus eines Sicherheitsetiketts, dargestellt als Querschnittsansicht des Etiketts aus Figur 4A,
Figur 5 noch ein weiteres Beispiel hinsichtlich der Flächenstruktur der Leiterbahnschicht,
Figur 6 ein zweites Alternativbeispiel hinsichtlich des Schichtaufbaus eines Sicherheitsetiketts,
Figur 7A ein drittes Alternativbeispiel zum Schichtaufbau eines Sicherheitsetiketts mit eigenem, lediglich partiellen Stützsubstrat,
Figur 7B das Etikett aus Figur 7A nach Entfernen des Liners,
Figur 8 ein viertes Alternativbeispiel hinsichtlich des Schichtaufbaus eines Sicherheitsetiketts mit seitlich überstehendem Oberetikett zum umseitigen Aufkleben auf einen Gegenstand,
Figur 9A ein weiteres Alternativbeispiel hinsichtlich des Schichtaufbaus für ein Verbundetikett, welches das Sicherheitsetikett umfasst,
Figur 9B einen exemplarischen Flächenaufbau eines Verbundetiketts beispielsweise gemäß Figur 9A,
Figur 10 den Schichtaufbau noch zu verarbeitender Schichtverbunde zum Herstellen einer weiteren Ausführungsform eines Verbundetiketts, welches ein Sicherheitsetikett umfasst, und
Figur 11 drei verschiedene Ausführungsformen für eine lateral inhomogene Verdruckung einer beliebigen Schicht am Beispiel einer Trägerlack- oder Transferlackschicht eines Sicherheitsetiketts oder sonstigen Teiletiketts.

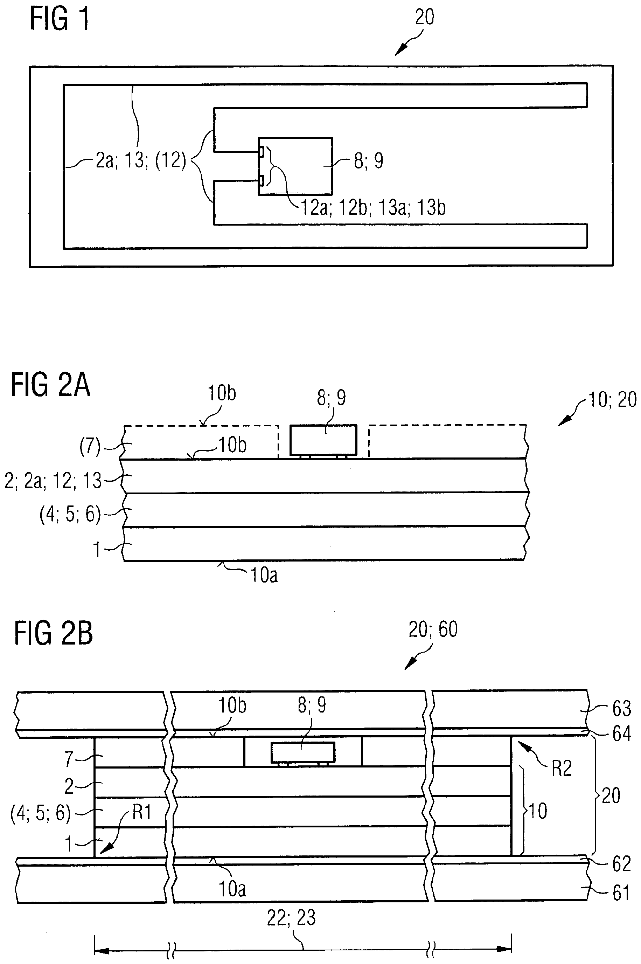

Figur 1 zeigt in schcmatischcr Draufsicht ein Etikett, das einen Chip 8 mit einem integrierten Schaltkreis, insbesondere einen RFID-Chip 9 aufweist. Das Sicherheitsetikett 20 besitzt eine größere Flächenabmessung bzw. Grundfläche, d.h. einen größeren Flächeninhalt als der Chip 8. Im außerhalb des Chips 8 gelegenen Bereich der Grundfläche bzw. Flächenabmessung des Sicherheitsetiketts 20 verläuft mindestens eine Leiterbahn 2a, die an mindestens einen, vorzugsweise an zwei Kontaktanschlüsse des Chips 8 angeschlossen ist. Die mindestens eine Leiterbahn 2a ist beispielsweise eine Antenne 12 oder (wie dargestellt) eine Messleitung 13 zur elektrischen Messung der Leitfähigkeit, des elektrischen Widerstandes oder einer Kapazität mit Hilfe des Chips 8. Vorzugsweise ist die Antenne 12 oder Messleitung 13 an zwei Anschlüsse 12a, 12b bzw. 13a, 13b des Chips 8; 9 angeschlossen. Diese Anschlüsse können insbesondere elektrische Bondkontakte, beispielsweise direkte Bondverbindungen zwischen chipseitigen Kontakten und dem Schichtenstapel (bzw. darin integrierten Leiterbahn 2a) umfassen.

Ein herkömmliches Sicherheitsetikett enthält mindestens ein etiketteneigenes Trägersubstrat, beispielsweise eine Papier- oder Kunststofffolie, welche sich über die gesamte Flächenabmessung des Etiketts erstreckt und diese definiert. Bei einem anmeldungsgemäßen Etikett hingegen, wie es in den nachfolgenden Figuren anhand der Querschnittsansichten deutlich wird, verfügt jedoch über kein etiketteneigenes Substrat, insbesondere über keine etiketteneigene (Papier- oder Kunststoff-) Folie, sondern ist zumindest in seinem überwiegenden Flächenbereich als bloßes Drucketikett, d.h. lediglich drucktechnisch erzeugtes Etikett realisiert. Ungeachtet zusätzlicher Trägersubstrate oder Trägerfolien, die vor dem Verspenden praktisch jedes Etiketts zu deren Konfektionierung angebracht sind, aber beim Verspenden oder unmittelbar danach bestimmungsgemäß entfernt und ggfs. entsorgt werden, besitzt das anwendungsgemäße Etikett keine etiketteneigene Folie bzw. kein etiketteneigenes Substrat, welches die Etikettenfläche vorgeben und definieren würde. Daher besteht der Schichtaufbau des anmeldungsgemäßen Etiketts auch ausschließlich oder überwiegend (über mehr als 70 %, vorzugsweise mehr als 85 % seiner Etikettengrundfläche) nur aus Druckschichten, d.h. aus gedruckten bzw. verdruckten Schichten.

Figur 2A zeigt in schematischer Querschnittsansicht eine erste Ausführungsform eines anmeldungsgemäßen Sicherheitsetiketts 20 hinsichtlich des Schichtaufbaus. Der laterale, innerhalb der Etikettenfläche definierte Aufbau kann gemäß Figur 1 oder einer sonstigen Figur gewählt sein. Gemäß Figur 2A umfasst das Sichcrhcitsctikctt 20 einen zerstörungsanfälligen, gedruckten Schichtenstapel 10, der zumindest eine erste Lackschicht 1 aus verdrucktem Lack und mindestens eine strukturierte, gedruckte Leiterbahnschicht 2, durch die mindestens eine den Chip 8 kontaktierende Leiterbahn 2a ausgebildet ist, aufweist. Die Leiterbahn 2a ist beispielsweise selektiv in Teilbereichen der Flächenabmessung als strukturierte Druckschicht ausgebildet, etwa in Form einer Antenne, Messleitung oder eines Abschnitts davon. In Höhe der strukturierten, gedruckten Leiterbahnschicht 2 bzw. der Leiterbahn 2a können die benachbarten, lateral umliegenden Flächenbereiche mit einem Lack aufgefüllt sein. Alternativ kann die umgebende Oberfläche bzw. Grenzfläche wahlweise freiliegend sein oder an eine nächsthöhere gedruckte Schicht, beispielsweise eine optionale Klebstoffschicht 7 angrenzen.

Der Schichtenstapel 10 aus gedruckten Schichten umfasst (zusätzlich zur elektrisch nichtleitenden bzw. isolierenden ersten Lackschicht 1 und zur mindestens einen strukturierten Leiterbahnschicht 2) optional noch zumindest eine Stabilisierungslackschicht 4 und/oder eine oder mehrere Druckfarbschichten 5; 6, je nach Bestimmung und Verwendung des Sicherheitsetiketts 20. Der Schichtaufbau kann auch abweichend von Figur 2A gewählt sein; zumindest aber eine erste Lackschicht 1 und die strukturierte Leiterbahn 2a sind Bestandteile des zerstörungsanfälligen Schichtenstapels 10.

Optional kann das Sicherheitsetikett 20 weiterhin eine etiketteneigene Klebstoffschicht 7 aufweisen, die beispielsweise auf eine chipseitige Oberfläche 10b, auf der auch der Chip angebracht ist, aufgeklebt ist. Die Klebstoffschicht 7 kann beispielsweise im Bereich des Chips 8 eine Aussparung aufweisen oder aus mehreren Flächenstücken bestehen. Alternativ kann der Chip 8 durch die Klebstoffschicht 7 überklebt bzw. unterklebt sein, sodass keine Aussparung erforderlich ist. Figur 2A wie auch alle nachfolgenden Figuren sind nicht maßstabsgerecht gezeichnet; insbesondere sind viele Schichtdicken der besseren Erkennbarkeit wegen übertrieben groß dargestellt, während der Chip 8; 9 verkleinert dargestellt ist. Das Sicherheitsetikett 20 und sein Schichtenstapel 10 brauchen nicht so eben bzw. plan liegend geformt zu sein wie dargestellt; insbesondere wenn der Chip 8 durch die optionale Klebstoffschicht 7 des Etiketts oder durch eine Klebstoffschicht eines Untergrunds, Gegenstands oder weiteren Etiketts oder Teiletiketts von seiner zweiten Seite her bedeckt oder umgeben wird.

Figur 2B zeigt in schematischer Querschnittsansicht das Sicherheitsetikett 20 gemäß Figur 2A, wie es als Konfektionsware 60 vertreibbar ist. Das Sicherheitsetikett 20 ist (wie praktisch jedes Etikett) auf einem Trägersubstrat 61 konfektioniert, das zumindest einseitig mit einer Antihaftschicht 62 beschichtet ist. Eine solche Antihaftschicht 62 ist in der Regel eine Silikonschicht, d.h. eine Silikonisierungsschicht, die als Beschichtung des Trägersubstrats 61 zumindest im Flächenbereich der Grundfläche jedes noch auszubildenden Etiketts 20 und ggfs. des Gitterabzugs aufgedruckt ist oder wird. Dennoch ist ein solches Trägersubstrat 61 kein etiketteneigenes Substrat, insbesondere keine etiketteneigene Papier- oder Kunststofffolie, sondern dient lediglich als Träger für das Etikett, solange bis das Etikett erstmalig auf einen zu etikettierenden Gegenstand verspendet wird. Das Etikett 20 selbst hingegen ist substratlos und folienlos bzw. substratfrei und folienfrei, d.h. es besteht insgesamt (oder jedenfalls in seinem überwiegenden Flächenbereich) lediglich aus gedruckten Schichten, also Druckschichten.

Gedruckte Schichten im Sinne dieser Anmeldung sind solche Schichten (beispielsweise die Schichten 1, 2, 3, 4, 5, 6, 7), die drucktechnisch, d.h. durch einen Druckprozess wie beispielsweise Siebdruck (oder alternativ Flexodruck oder einem sonstigen Druckverfahren, etwa Inkjetdruck, oder mittels Schlitzdüsen) auf einem Untergrund, etwa einem später abzuziehenden Trägersubstrat oder seiner Antihaftschicht erzeugbar sind. Insbesondere bei Raumtemperatur verdruckbare, d.h. bei Raumtemperatur flüssige und aushärtbare, beispielsweise durch UV-Einstrahlung aushärtbare verdruckbare Flüssigkeiten, die auch als Lacke bezeichnet werden, eignen sich als Materialien zur Ausbildung der Schichten des Schichtenstapels und/oder der optionalen Klebestoffschicht 7. Abgesehen von solchen meist farblosen Lacken umfassen die verdruckbaren Flüssigkeiten auch Druckfarben zum Ausbilden farbiger, d.h. weißer, schwarzer oder farbiger Druckfarbschichten, die intransparent oder transparent sein können und zum Ausbilden von Beschriftungen, grafischen Bestandteilen oder sonstigen lesbaren oder betrachtbaren Etikettenbestandteilen (und teils auch unsichtbaren Sicherheitsmerkmalen) verwendbar sind. Je nach Schichtaufbau des Schichtenstapels kann das Etikett von der einen oder anderen Seite her oder auch beidseitig lesbar ausgebildet sein.

Gemäß Figur 2B ist das Sicherheitsetikett 20, so wie es vor dem Verspenden als Konfektionswarc 60 vertrieben wird, auf seiner entgegengesetzten Seite 10b auf einem abzichbarcn zweiten Trägersubstrat 63 (Liner) angeordnet. Sofern das Sicherheitsetikett 20 auf der Seite des Chips 8 eine Klebstoffschicht 7 aufweist, ist diese auf das zweite Trägersubstrat 63 bzw. dessen Antihaftschicht 64 aufgebracht. Alternativ kann die Antihaftschicht 64 auch an eine nichtklebende, zweite Oberfläche bzw. Grenzfläche des gedruckten Schichtenstapels 10 angrenzen. Sofern eine Klebstoffschicht 7 vorgesehen ist, kann sie wahlweise ein Bestandteil des Schichtenstapels 10 sein (beispielsweise als äußerste bzw. innerste Schicht des Schichtenstapels), die eine verspendbare Fläche des eigentlichen Etiketts 20 bildet, oder auf den Schichtenstapel 10 und/oder dem Chip aufgedruckt, aufkaschiert, auflaminiert oder in sonstiger Weise darauf aufgebracht sein. Dies gilt für sämtliche Ausführungsbeispiele der Figuren, Ansprüche und Beschreibungsteile dieser Anmeldung. Ebenso gilt für alle Ausführungsformen der Anmeldung, dass die Klebstoffschicht auch entfallen kann oder erst beim Verbinden des Sicherheitsetiketts mit einem weiteren Etikett oder Teiletikett in Kontakt mit dem Schichtenstapel 10 und/oder dem Chip 8; 9 zu kommen braucht.

Der Schichtenstapel 10, ggfs. zusammen mit der Klebstoffschicht 7, besitzt eine Flächenausdehnung, insbesondere eine äußere Flächenabmessung, die den Flächeninhalt des Etiketts 20 vorgibt. Somit ist auch der Flächeninhalt des Etiketts 20 lediglich durch gedruckte Schichten vorgegeben. Zusätzliche Stanzschritte zum lateralen Strukturieren der Etikettenfläche können angewandt werden, sind jedoch nicht zwingend erforderlich. Der drucktechnisch hergestellte Schichtenstapel 10, ggfs. mit draufliegender Klebstoffschicht 7, ist, da er ohne etiketteigenes Substrat auskommt, nach dem Verspenden (d.h. nach Entfernen beider Trägersubstrate 61, 63 bzw. Liner) verletzungsanfällig gegenüber einwirkenden äußeren Kräften.

Um ein sicheres, zerstörungsfreies Verspenden zu erleichtern, kann vorgesehen sein, dass der Schichtenstapel 10 des Etiketts auf einer ersten, beispielsweise von einer Klebstoffschicht 7 abgewandten Seite, Grenzfläche und/oder Oberfläche 10a eine gedruckte Schicht (etwa die erste Lackschicht 1) aufweist, deren Release-Wert R1 und/oder Trennkraft gegenüber einer Antihaftschicht (hier 62), insbesondere Silikon größer ist als der Release-Wert und/oder die Trennkraft der Klebstoffschicht 7 gegenüber einer Antihaftschicht 64, insbesondere Silikon. Somit ist die von dem Chip 8 abgewandte Oberfläche 10a des Schichtenstapels 10 nicht so leicht von Silikon oder einer sonstigen Antihaftschicht abzichbar wie die entgegengesetzte, chipscitigc Oberfläche 10b des Schichtcnstapcls 10 bzw. wie die Klebstoffschicht 7. Insbesondere wenn die Klebstoffschicht 7 vorhanden ist, ist diese vorzugsweise leichter von Silikon entfernbar als die entgegengesetzte Oberfläche 10a des Schichtenstapels 10. Vorzugsweise ist der Release-Wert R1 und/oder die Trennkraft der chipfernen Seite 10a des Schichtenstapels 10 um einen Faktor von mindestens 4, vorzugsweise von mindestens 10 oder mindestens 20 größer als derjenige Release-Wert R2 bzw. die Trennkraft auf der Oberfläche 10b. Bei einem herkömmlichen, folienbasierten Etikett mit etiketteigenem Substrat sind unterschiedlich starke Release-Werte oder Trennkräfte beim Abziehen von beiderseits anhaftenden Trägersubstraten (Liner) nicht erforderlich, da die Biegesteifigkeit und Stabilität des Etiketts selbst bereits ausreichend Widerstand bietet, um das Etikett und den jeweiligen Liner, ggfs. mit Hilfe überstehender Anfasslaschen sicher zu greifen und auseinander zu ziehen. Bei den substratlosen Sicherheitsetiketten 20 dieser Anmeldung jedoch fehlt eine vergleichbare Biegesteifigkeit des Etiketts. Die unterschiedlich großen Release-Werte R bzw. Trennkräfte auf beiden Etikettenseiten, auf die die Materialzusammensetzung der beiden äußersten Schichten des Sicherheitsetiketts 20 bzw. des gedruckten Schichtenstapels 10 ausgelegt ist, ermöglicht es, beim Auseinanderziehen zweier Trägersubstrate 61, 63 zuverlässig zunächst nur auf der chipseitigen, beispielsweise klebstoffseitigen Außenfläche 10b des Sicherheitsetiketts 20 das dortige Trägersubstrat 63 zu entfernen, ohne unbeabsichtigt das Etikett 20 von dem anderen Liner 61 zu lösen. Dadurch kann das Etikett 20 mit seiner Klebstoffschicht 7 zuerst auf einen zu etikettierenden Gegenstand, auf ein weiteres Etikett oder Teiletikett oder einen sonstigen Untergrund aufgeklebt werden oder, sofern das Etikett 20 selbst keine Klebstoffschicht 7 aufweist, mit einer Klebstoffschicht des weiteren Etiketts oder sonstigen Gegenstands in Kontakt gebracht werden. Nachdem eine solche Klebeverbindung hergestellt ist, kann anschließend das entgegensetzte Trägersubstrat 61 von der ersten, entgegengesetzten Oberfläche 10a des Schichtenstapels 10 abgezogen werden; der Release-Wert R1 oder die Trennkraft der dortigen, äußersten Schicht des Schichtenstapels 10 (hier der ersten Lackschicht 1) ist klein genug im Vergleich zur Klebkraft der Klebstoffschicht 7 gewählt. Die Seite 10a des gedruckten Schichtenstapels 10 ist daher von dem Liner 61 bzw. seiner Antihaftschicht 62 leichter abziehbar als die Klebstoffschicht 7 von einer nicht antihaftbeschichteten Oberfläche. Das vorab verspendete Etikett 20 ist nach Entfernen auch des Liners 61 zumindest im Großteil seiner Flächenabmessung (in Figur 2B vollständig) substratlos und ein reines Drucketikett, d.h. ein gedrucktes bzw. verdrucktes Etikett. Herkömmliche Etiketten hingegen sind bedruckte Etiketten, die eine ctikcttcncigcnc Folie oder Trägerschicht als bedruckbaren und nicht ablösbaren Hauptbestandteil enthalten.

Die Herstellung des Etiketts gemäß Figur 2A oder 2B erfolgt, indem der Schichtenstapel 20 auf ein antihaftbeschichtetes Trägersubstrat 61, 62 gedruckt wird, vorzugsweise einschließlich der Klebstoffschicht 7, die eine Aussparung für den Chip 8 besitzen kann. Danach wird ein weiteres antihaftbeschichtetes Trägersubstrat 63; 64 auf die Klebstoffschicht 7 aufkaschiert und anschließend das druckschichtenbasierte Sicherheitsetikett 20 gemäß den vorgesehenen Flächenabmessungen gestanzt. Optional können dabei auch dem Fälschungsnachweis dienende Stanzlinien oder sonstige Stanzstrukturen ausgebildet werden. Das so konfektionierte Etikett ist auslieferungsfertig; der Kunde oder Benutzer entfernt zunächst das zweite Trägersubstrat 63; 64 (Liner), was dank der unterschiedlich großen Release-Werte R1 > R2 durch Auseinanderziehen beider Trägersubstrate 61, 63 erfolgen kann. Die klebende Seite 7 des noch am Trägersubstrat 61 haftenden Sicherheitsetiketts wird dann auf einen zu etikettierenden Gegenstand aufgeklebt; anschließend wird das erste Trägersubstrat 61; 62 abgezogen. Das so verspendete Etikett 20 ist besonders beschädigungsanfällig für jede weitere Manipulationen am Etikett 20 insbesondere an seinem lediglich aus Druckschichten gebildeten Schichtstapel 20, insbesondere wenn versucht wird, diesen wieder abzulösen, um ihn anderweitig aufzukleben. Dabei wird die ebenfalls aus verdrucktem (und leitfähigem) Lack bestehende Leiterbahn 2a beschädigt, unterbrochen oder zerstört, was mit Hilfe des Chips 8 elektrisch nachweisbar ist. Der Chip 8 ist durch geeignete mechanisch-elektrische Leitklebeverbindungen (z.B. Bondverbindungen oder Lötverbindungen) mit der mindestens einen Leiterbahn 2a, d.h. mit der im Schichtenstapel 10 enthaltenen Leiterbahnschicht 2 verbunden.

Das Sicherheitsetikett 20 ist ein folienloses, trägerschichtloses Druckschichtenetikett, dessen Flächenabmessung bzw. Umrisskontur durch den gedruckten Schichtenstapel 10 vorgegeben ist. Das Etikett 20 bildet eine zerstörungsanfällige Druckstruktur, d.h. Druckschichtenstruktur besonders geringer Verbiegesteifigkeit. Solange das Etikett noch mit mindestens einer konfektionierungsbedingten Trägerfolie 61, 63 etc. verbunden ist, bildet es eine leicht biegsame Einheit mit eigener Stanz- oder Umrisskontur, die auch zur Weiterverarbeitung im Verbund mit einem weiteren Etikett geeignet ist.

Alle bis hier erläuterten Merkmale können einzeln und auch in Kombination miteinander mit jeder der nachfolgend diskutierten Figuren, Ausführungsbeispiele und Patentansprüche kombiniert werden.

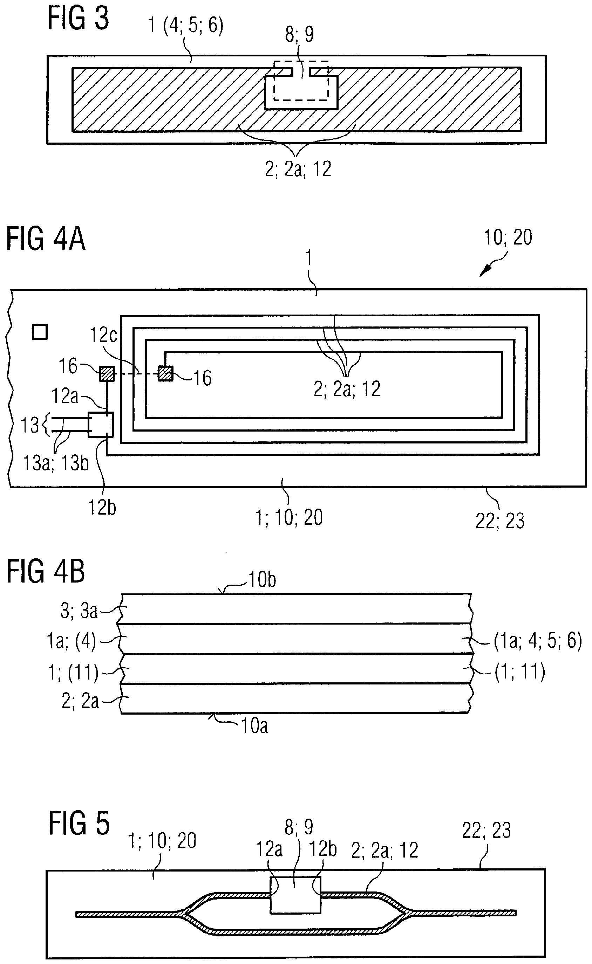

Die Figuren 3, 4A und 5 zeigen Draufsichten auf alternative Ausführungsformen hinsichtlich der Geometrie und des Verlaufs der mindestens einen Leiterbahn 2a innerhalb der durch die Stanz- oder Umrisskontur 22, 23 des Etiketts 20 vorgegebenen Etikettenfläche. Der Chip 8 ist wiederum ein RFID-Chip 9. Gemäß Figur 3 ist die Leiterbahn 2a eine Antenne 12, beispielsweise zur Funkübertragung im UHF-Bereich, die an zwei Anschlüsse 12a, 12b des Chips angeschlossen, beispielsweise gebondet ist. In den nicht durch die Leiterbahnschicht 2 leitfähig überdeckten Flächenbereichen ist - wahlweise auf gleicher Höhe oder darunter - die erste Lackschicht 1 (etwa aus einem Transferlack) oder eine sonstige elektrisch isolierende Schicht, alternativ oder zusätzlich auch eine Stabilisierungslackschicht 4 oder sonstige Isolationsschicht oder eine Druckfarbenschicht 5, 6 angeordnet. Die als Leiterbahn 2a strukturierte Leiterbahnschicht 2 kann beispielsweise aus Silber, Kupfer oder einem sonstigen Metall oder einer Legierung bestehen oder ein solches Material enthalten; grundsätzlich kommt jedes flüssig verdruckbare und nach dem Verdrucken (und ggfs. Aushärten) leitfähige Material in Frage. Das flüssige bzw. flüssig verdruckbare Material kann wahlweise metallische oder anderweitig elektrisch leitfähige Bestandteile, beispielsweise auch leitfähige Polymere enthalten; beispielsweise PEDOT oder ein sonstiges transparentes Polymer.

Figur 4A zeigt ein Ausführungsbeispiel mit einer Leiterbahn, beispielsweise einer Antenne 12, die aus mindestens zwei leitfähigen Schichten gebildet ist. Figur 4B zeigt in Querschnittsansicht die zwei leitfähigen Schichten 2, 3, die in verschiedenen Schichtenebenen des Schichtenstapels 10 angeordnet sind. Gemäß Figur 4A und 4B sind zwei Leiterbahnen 2a, 3a der Leiterbahnschichten 2; 3 durch mindestens eine isolierende Schicht 1; 1a vertikal beabstandet und nur lokal durch gedruckte Kontaktlochfüllungen 16 in der Isolationsschicht miteinander verbunden. Die Isolationsschicht kann die erste Lackschicht 1, etwa aus Transferlack 11, und/oder eine weitere Isolationsschicht 1a umfassen; insbesondere kann die erste Lackschicht 1 innerhalb des Schichtenstapels 10 (statt an der später freizulegenden Oberfläche 10a des Sicherheitsetiketts 20) angeordnet sein. Die Isolationsschicht 1a kann eine Stabilisierungslackschicht 4 oder eine Druckfarbschicht 5; 6 sein oder umfassen.

Figur 4A zeigt den Verlauf der als Antennenspule bzw. Antennenwindung verlaufenden Leiterbahn 2a innerhalb der Stanzkontur 22 bzw. Flächenabmessung 23 des Etiketts 20. Die zweite zur Antenne 12 gehörige Leiterbahn 3a in der zweiten Leiterbahnebene 3 ist durch gedruckte Kontaktlochfüllungen 16, welche durch die mindestens eine Isolationsschicht 1; 1a hindurchreichen, mit der ersten Leiterbahn 2a leitend verbunden. Die Antenne 12 ist an zwei Anschlüsse 12a, 12b des Chips angeschlossen. Bei allen Ausführungsformen dieser Anmeldung kann der Chip optional über RFID, W-LAN, Bluetooth oder durch eine sonstige Funktechnik bzw. durch eine sonstige drahtlose Kommunikationstechnik ansteuerbar sein. Alternativ oder zusätzlich zum Chip 8; 9 können auch sonstige elektrische bzw. elektronische Bauteile (SMD; Surface Mounted Device; oberflächenmontiertes Bauelement) oder Baugruppen (PCB; Printed Circuit Board; gedruckte Schaltung) in das Etikett 20 integriert sein. Der Chip 8; 9 kann beispielsweise eine Grundfläche von mindestens 200 x 200 µm besitzen und durch Bondkontakte mit dem gedruckten Schichtenstapel 10 verbunden sein; die Bondkraft ist an die Klebe- und Release-Kräfte der vorhandenen Klebstoff- und Lackschichten abstimmbar. Der Chip kann ferner mittels eines Loop bzw. Strap kontaktiert sein. Im Übrigen kann der Chip 8; 9 auch ungehäust sein (CSP; chip scale package; Gehäuse in der Größenordnung des Chips).

Alle obigen Zusatzmerkmale im Zusammenhang mit dem Chip sind auch auf alle übrigen Ausführungsformen der Anmeldung übertragbar. Weiterhin zeigt Figur 4A zwei weitere Anschlüsse 13a, 13b des Chips 8, welche zu einer Messleitung 13 oder sonstigen Sensorstruktur gehören, entlang deren Länge und Verlaufsrichtung der Schichtenstapel 10 ebenfalls ausgebildet ist, etwas als schmaler seitlicher Fortsatz oder Ausläufer einer ansonsten kompakten Grundfläche. Die Messleitung 13 dient etwa zur Messung eines Widerstandes, einer Leitfähigkeit oder einer Kapazität; hierfür ist lediglich eine einzige Leiterbahnschicht zwischen beiden Anschlüssen 13a, 13b erforderlich. Die elektrische Messung erfolgt mittels des Chips, der einen Sensor bildet oder enthält. Das Etikett kann auch mit Sensor- oder Messleiter, aber ohne Antenne ausgebildet sein. Hinsichtlich des Schichtaufbaus kann der gedruckte Schichtenstapel 10 auch abweichend von Figur 4B aufgebaut sein. Im Übrigen kann das Etikett auch zwei oder mehr Sensorleitungen bzw. Messleitungen aufweisen.

Figur 5 zeigt ein weiteres Ausführungsbeispiel hinsichtlich des Verlaufs der mindestens einen Leiterbahn 2a innerhalb der Stanzkontur 22 bzw. Flächenabmessung 23 des Etiketts 20 oder des gedruckten Schichtenstapels 10. Die Leiterbahnschicht 2 ist hier als einlagige Dipolantenne 12; 2a strukturiert, die durch zwei Anschlüsse 12a, 12b an den Chip 8; 9 angeschlossen ist.

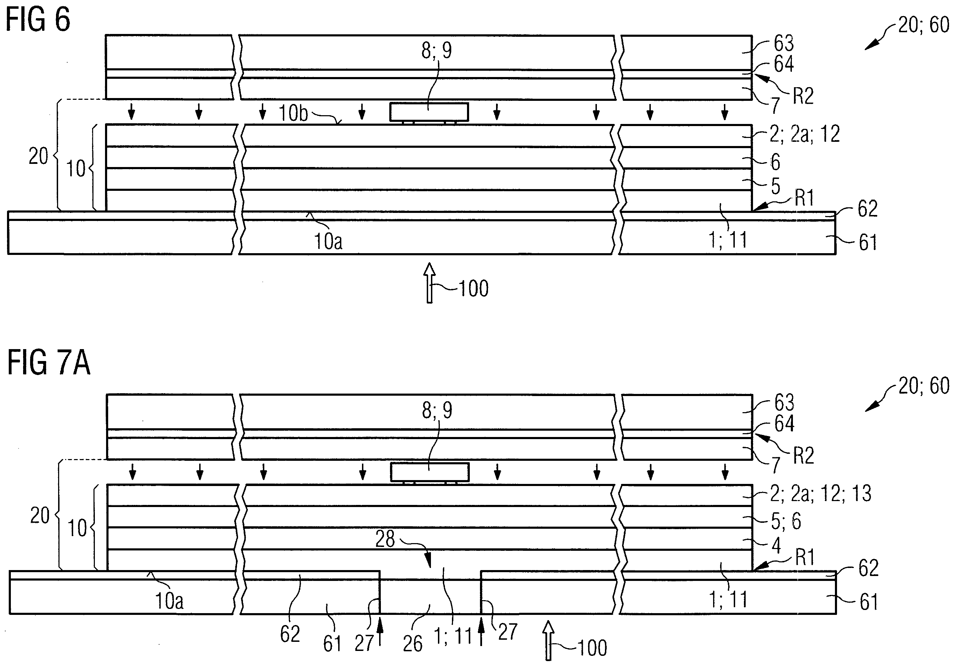

Der Flächenaufbau der Etiketten in den Figuren 1, 3, 4A, 5, 9 und 11 ist hinsichtlich des Schichtaufbaus des oder der beteiligten Schichten und Schichtenstapel gemäß verschiedenen Ausführungsbeispiele, wie sie in Figur 2A, 2B und 4A gezeigt sind oder nun mit Bezug auf die weiteren Figuren 6 bis 9A und 10 erläutert werden, variierbar.

Figur 6 zeigt ein solches weiteres, zweites Ausführungsbeispiel hinsichtlich des Schichtaufbaus des gedruckten Schichtenstapels 10. Das Etikett 20 dient zur Betrachtung aus nur einer Betrachtungsrichtung 100, d.h. von nur einer Seite her, wo die erste transparente Lackschicht 1, beispielsweise eine Transferlackschicht 11, nach Verspenden des Etiketts als Oberfläche 10a an der Luft freiliegt. Auf der entgegengesetzten Seite besitzt der gedruckte Schichtenstapel 10 eine (einzige) Leiterbahnschicht 2, deren Leiterbahn 2a als Antenne 12 strukturiert ist. Die laterale Strukturierung von Leiterbahnschichten 2 und ggfs. 3 sind in den Querschnittsansichten der Figur 6 und der nachfolgenden Figuren der Übersichtlichkeit halber nicht mehr zeichnerisch dargestellt; entsprechende Leiterbahnschichten 2, 3 sind vereinfachend als lateral durchgehende Schichten gezeichnet, sind aber dennoch lateral strukturiert. Zwischen der Transferlackschicht 1, 11 und der Leiterbahnschicht 2 ist in Figur 6 mindestens eine Druckfarbschicht 5; 6 angeordnet, beispielsweise eine erste Druckfarbschicht 5 (beispielsweise aus roter Druckfarbe) und eine (aus Betrachtungsrichtung 100) tieferliegende zweite Druckfarbschicht 6 (beispielsweise Weiß); Art, Anzahl und Reihenfolge solcher Farbschichten sowie zusätzlicher Isolations- oder Verstärkungsschichten (nicht dargestellt) sind beliebig variierbar. Die beiden dargestellten Farbschichten 5, 6 dienen beispielsweise als rote Beschriftung vor einem weißen Untergrund. Die Antenne 12 und der Chip 8; 9 werden vorzugsweise durch die Druckfarben visuell verdeckt. Sämtliche Druckfarbschichten können in lateraler Richtung (d.h. innerhalb der Stanzkontur oder der Flächcnabmcssung des gedruckten Schichtcnstapcls 10) beliebig strukturiert sein, also je nach Druckbild in beliebigen Flächenstücken selektiv aufgedruckt sein und in übrigen Flächenbereichen fehlen. Anstelle von Rot und Weiß können beliebige Druckfarben oder sonstige Farben realisiert sein.

Die Herstellung des Etiketts aus Figur 6 erfolgt, indem ein erstes Trägersubstrat 61 (Liner), das mit einer Antihaftschicht 62 (Silikon) versehen ist, mit der ersten (Transfer-) Lackschicht 1; 11, den Druckfarbschichten 5, 6 und der Leiterbahnschicht 2 gemäß den gewünschten Flächenabdeckungen bedruckt wird. Zumindest eine verdruckte Lackschicht, beispielsweise die zuunterst liegende erste Lackschicht 1 aus Transferlack 11, ist beispielsweise unstrukturiert, d.h. vollflächig und lückenlos innerhalb der Flächenabmessung 23 des Schichtenstapels 10 ausgebildet. Alternativ kann die erste Lackschicht 1 aus Transferlack 11 auch strukturiert sein und insbesondere Aussparungen aufweisen. Der fertige Schichtenstapel 10 wird mit dem Chip 8; 9 bestückt. Dann wird eine Klebstoffschicht 7 aus einem Transferklebstoff, der auf einen zweiten, mit einer weiteren Antihaftschicht 64 beschichteten Trägersubstrat 63 (Liner) aufgebracht ist, auf die chipseitige Oberfläche 10b des Schichtenstapels 10 aufkaschiert. Die nach unten weisenden Pfeile (auf in nachfolgenden Figuren), die die Chiphöhe überbrücken, deuten an, dass dieser Schichtabstand nach dem Kaschieren nicht mehr besteht und die beabstandet gezeichneten Schichten direkt aufeinanderliegen. Der so gebildete Schichtverbund wird dann gemäß dem gewünschten Etikettenformat gestanzt, wobei optional auch Sicherheitsstanzungen (siehe oben) ausgebildet werden können. Das nun versandfertig konfektionierte Etikett 20; 60 wird vom Anwender von dem zweiten Trägersubstrat 63; 64 befreit und mit der Klebstoffschicht 7 auf den zu etikettierenden Gegenstand aufgeklebt. Anschließend wird das entgegengesetzte Trägersubstrat 61; 62 von dem verspendeten Lackschichtenetikett 20 abgezogen.

Wiederum sind die Materialien der verdruckten Schichten, insbesondere der Transferlackschicht 1; 11 und der Klebstoffschicht 7 geeignet gewählt, um diese Art des Verspendens zu erleichtern. Insbesondere ist die Trennkraft, d.h. der Release-Wert R; R1 der Transferlackschicht 1; 11 größer als der Release-Wert R2 bzw. die Trennkraft der Transferklebstoffschicht 7. Wenn in der Anmeldung von einem Release-Wert oder einer Trennkraft einer Schicht die Rede ist, bezieht sich dies auf das Abziehen einer solchen Schicht von einer antihaftbcschichtctcn, angrenzenden Schicht, insbesondere einer Silikonschicht, wie sie üblicherweise auf Linern, d.h. lediglich zur Konfektionierung dienenden Trägersubstraten 61, 63 ausgebildet ist. Der Release-Wert R1 ist größer als der Release-Wert R2 der Klebstoffschicht 7. Zugleich jedoch ist der Release-Wert R1 der Transferlackschicht 1 gegenüber Silikon deutlich kleiner als ein entsprechender Wert, der zum Abziehen der Klebstoffschicht 7 von einer nicht antihaftbeschichteten Oberfläche eines etikettierten Gegenstands anzusetzen wäre, denn die Klebstoffschicht 7 des Etiketts klebt auf dem nicht silikonisierten Untergrund permanent. So ist gewährleistet, dass beim Auseinanderziehen beider Liner 61, 63 zuerst die Klebstoffschicht 7 freigelegt wird, aber nach Aufbringen dieser Schicht auf einen nicht antihaftbeschichteten Untergrund der andere Liner 61 abziehbar ist, ohne das eigentliche Druckschichtetikett 20; 10 zu beschädigen. Erst nachfolgende Manipulationen am Schichtenstapel 10 führen mechanische, elektrisch nachweisbare Beschädigungen des Schichtenstapels 10 herbei. Das Etikett ist daher (wie bei allen übrigen Ausführungsformen der Anmeldung) nicht wieder ablösbar, umetikettierbar oder anderweitig weiter verwendbar.

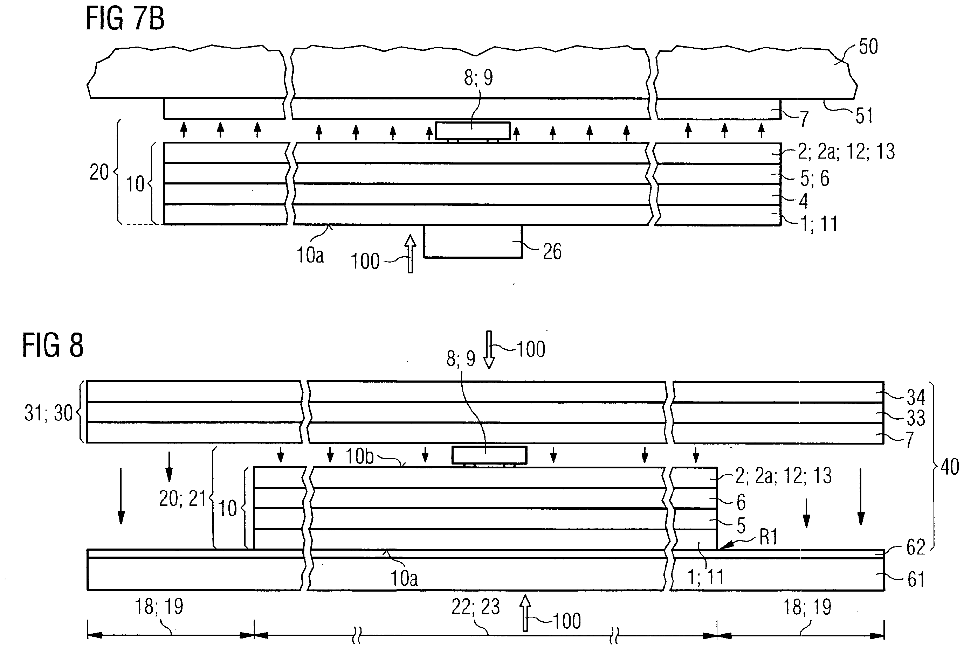

Die Figuren 7A und 7B zeigen ein Ausführungsbeispiel eines im Wesentlichen druckschichtbasierten Sicherheitsetiketts 20, das zusätzlich ein Substrat 26, beispielsweise eine Folie aufweist, welches sich jedoch nur über einen Teil der Etikettenfläche erstreckt, beispielsweise maximal 10% oder höchstens 20% der durch den gedruckten Schichtenstapel 10 überspannten Etikettenfläche einnimmt. Ein solches teilflächiges, d.h. partielles Substrat dient als Stützsubstrat 26 in demjenigen Grundflächenbereich, in dem der Chip 9 anzuordnen ist. Dennoch ist das Etikett 20 auch im verspendeten Zustand im überwiegenden Flächenbereich seiner Flächenausdehnung substratfrei und folienfrei. Das lokale bzw. lediglich teilflächige Stützsubstrat 26 verhindert Beschädigungen des Schichtenstapels 10 und seiner mindestens einen Leiterbahn, die durch Verwerfungen infolge der Höhe des Chips beim Verspenden entstehen könnten. Die Herstellung des Etiketts 20 gemäß Figur 7A beginnt mit dem Aufdrucken einer ersten Antihaftschicht 62 auf ein Trägersubstrat 61 aus geeignetem Material, um ein Teilstück daraus als teilflächiges Stützsubstrat 26 des herzustellenden Etiketts 20 weiter zu verwenden. Hierfür eignet sich eine Papier- oder Kunststofffolie, beispielsweise eine Kunststofffolie aus Polycarbonat. Auf diese wird zunächst eine Antihaftschicht 62 aus beispielsweise Silikon aufgedruckt, allerdings als strukturierte Schicht, die in einem Flächenbereich, wo das Trägersubstrat 61 als teilflächiges Stützsubstrat 26 im Bereich des Chips weiter verwendet werden soll, eine Aussparung 28 aufweist. Danach wird eine erste Lackschicht 1; beispielsweise aus einem Transferlack 11 aufgedruckt. Diese kommt im Bereich der Aussparung 28 direkt mit dem unbeschichteten Material des Trägersubstrats 61, beispielsweise mit Polycarbonat oder einem anderem Kunststoff in Kontakt; dort haftet das Trägersubstrat 61 fester an der ersten Lackschicht 1; 11 als in dem übrigen, antihaftbeschichteten Flächenbereichen um die Aussparung 28 herum. Der nun halbfertige Schichtaufbau wird gestanzt, möglichst ohne die Transferlackschicht 1; 11 zu beschädigen (etwa durch unterseitiges Stanzen), wobei das Trägersubstrat 61 entlang einer um die Aussparung 28 umlaufenden Stanzlinie 27 durchgestanzt wird und darin als etiketteneigendes, aber lediglich teilflächiges Stützsubstrat 26, das nun vom Rest des Trägersubstrats 61 abgetrennt ist, weiter verwendbar ist. Die Stanztiefe reicht nach oben etwa bis zur Unterseite des unvertieften Bereichs der Transferlackschicht 1; 11 so dass diese unterseitig allenfalls angestanzt statt durchgestanzt wird. Anschließend wird auf die ganzflächig freiliegende Seite der Transferlackschicht 1; 11 eine zusätzliche Stabilisierungslackschicht 4 aufgedruckt, die aus demselben Lack 1; 11 oder einem anderen Lack oder sonstigen verdruckbaren Material als die erste Transferlackschicht 1;11 bestehen kann. Optional werden nachfolgend ein oder mehrere (in der Regel strukturierte) Farbschichten 5;6 und schließlich die mindestens eine (ebenfalls strukturierte) Leiterbahnschicht 2 in Form der mindestens einer Leiterbahn 2a;12; 13 aufgedruckt, bevor der so gebildete Schichtenstapel 10 mit dem Chip 8; 9 bestückt wird. Der Übersichtlichkeit halber sind die lateralen Strukturierungen der Farbschichten 5, 6 und der Leiterbahnschicht 2 nicht dargestellt und diese Schichten vereinfachend ganzflächig durchgehend gezeichnet.

Eine Klebstoffschicht 7 aus einem Transferklebstoff, der auf ein zweites Trägersubstrat 63 aufgebracht ist, wird auf den Schichtenstapel 10 und/oder den Chip 8, 9 aufkaschiert. Dann wird das Etikett 20 gemäß der gewünschten Flächenausdehnung 23 gestanzt, wobei optional wieder Sicherheitsstanzlinien ausbildbar sind. Das in dieser Weise fertig konfektionierte Etikett 20 ist zwischen den beiden Trägersubstraten 61, 63 angeordnet, wobei jedoch ein Flächenstück des ersten Substrats 61 durch die Stanzlinie 27 abgetrennt und mit seiner einen Seite mit der Transferlackschicht 1;11 verbunden ist, um dauerhaft als teilflächiges, partielles Stützsubstrat 26 des ansonsten folienlosen, druckschichtbasierten Sicherheitsetiketts 20 weiter verwendet zu werden. Zum Verspenden wird an die Antihaftschicht 64 des zweiten Trägersubstrats 63 angrenzende Klebstoffschicht 7 freigelegt und auf den zu etikettierenden Gegenstand aufgeklebt. Anschließend wird auf der entgegensetzten Seite 10a das mit der strukturierten Antihaftschicht 62 versehene Trägersubstrat 61 entfernt, wobei das durch die Stanzlinie 27 bereits abgetrennte Flächenstück 26, das an die Transferlackschicht 1; 11 angrenzt, an dieser verbleibt und fortan den Schichtenstapel 10 im Bereich des Chips überdeckt. Wiederum sind die Materialien der Transferlackschicht 1; 11 und der Klebstoffschicht 7 so gewählt, dass der Release-Wert R1, d.h. die Trennkraft der Transferlackschicht 1 (gegenüber einer Haftschicht wie Silikon) größer ist als der Release-Wert R2 bzw. die Trennkraft der Klebstoffschicht 7 (gegenüber einer Haftschicht wie Silikon). Wie bei allen übrigen Ausführungsformen auch ist ein Mindestunterschied zwischen beiden Release-Werten R1, R2 von mindestens 4, besser noch mindestens 10 oder 20 bevorzugt, um ein sicheres Auseinanderreißen zunächst nur zwischen der Klebstoffschicht 7 und dem zweiten Trägersubstrat 63, 64 zu gewährleisten. Andererseits kann das relative Verhältnis zwischen beiden Release-Werten R1, R2 auch kleiner gewählt werden; beispielsweise in Höhe von mindestens 2 oder 1,5; es liegt jedoch stets oberhalb des Zahlenwerts Eins.

Figur 7B zeigt das Etikett aus Figur 7A in verspendenten, von den Konfektionierungssubstraten 61, 63 befreiten Zustand; lediglich das ausgestanzte Flächenstück des zuvor unterseitigen Substrats 61 dient nun als teilflächiges Stützsubstrat 26 und liegt aus der Betrachtungsrichtung 100 gesehen auf dem ansonsten druckschichtbasierten Sicherheitsetikett 20 oben auf, wohingegen die Klebstoffschicht 7 direkt auf der Oberfläche 51 des etikettierten Gegenstandes 50 haftet. Im Vergleich zur Klebkraft der Haftschicht 7 auf der nicht antihaftbeschichten Oberfläche 51 des Gegenstandes 50 ist der Release-Wert R1 der Transferlackschicht 1;11 wesentlich kleiner, vorzugsweise um einen Faktor von mindestens 20 oder mindestens 50 kleiner.

Figur 8 zeigt ein Ausführungsbeispiel eines aus zwei entgegengesetzten Blickrichtungen 100 betrachtbaren, folienlosen Sicherheitsetiketts 20 im fertig konfektionierten Zustand. Solch ein Etikett 20 eignet sich beispielsweise zum Aufkleben auf Glasschreiben, beispielsweise Windschutzscheiben oder andere Fensterflächen von Fahrzeugen, Maschinen, Anlagen oder Gebäuden. Solch ein Etikett ist beispielsweise als Maut-Vignette oder zur Erfassung, Kontrolle oder Gebührenerhebung einer Zugangsberechtigung, beispielsweise für automatisierte Schrankensysteme vor Autobahnen, Zollgrenzen oder sonstigen kostenpflichtigen Fahrstrecken oder Regionen einsetzbar, um durch Auslesen des Chips die Identität und/oder Berechtigung des Fahrzeugs oder dessen Fahrers zu prüfen und ggfs. eine entsprechende Zahlung oder Abbuchung zu veranlassen. Das Etikett gemäß Figur 8, aber auch gemäß aller übrigen Ausführungsformen der Beschreibung, Zeichnungen und Ansprüche kann in dieser Weise, aber ebenso als Ausweis, Versicherungskarte, Mitgliedsausweis oder sonstige Zugangsberechtigung oder eine Nutzungsberechtigung für Personen oder Fahrzeuge oder andere Gegenstände ausgebildet sein, und zwar unabhängig davon, ob das Etikett einseitig oder zweiseitig lesbar ist und wie das Etikett in lateraler Richtung und seinen gedruckter Schichtenstapel in Richtung der Schichtdicke aufgebaut ist.

Auf einem ersten Trägersubstrat 61 in Figur 8 ist eine erste Lackschicht 1, etwa eine Transferlackschicht 11 ausgebildet, die zugleich eine erste Oberfläche 10a des Schichtenstapels 10 bildet. Die Herstellung des Etiketts gemäß Figur 8 beginnt mit dem Drucken dieser vorzugsweise ganzflächigen, ununterbrochenen Schicht 1; 11 gemäß der gewünschten Flächenausdehnung des Schichtenstapels 10. Optional werden dann ein oder mehrere Druckfarbschichten 5 (beispielsweise aus roter Druckfarbe) und 6 (beispielsweise aus weißer Druckfarbe) verdruckt, bevor mindestens eine Leiterbahnschicht 2, etwa in Form einer Antenne 12 und/oder Messleitung bzw. Sensorleitung 13 verdruckt wird. Nach dem Bestücken mit dem Chip 8; 9 wird der Schichtenstapel 10 mit einem weiteren Schichtenstapel kaschiert, der zumindest eine Klebstoffschicht 7, eine Bröselfolie 33 und mindestens eine Druckfarbschicht 34 umfasst. Der weitere Schichtenstapel wird hierfür zunächst mit seiner Klebstoffschicht 7 von einem weiteren Trägersubstrat (nicht dargestellt) abgezogen und auf die chipseitige Oberfläche 10b des gedruckten, d.h. druckschichtbasierten Schichtenstapels 10 aufkaschiert. Der Schichtenstapel 10 bildet eine folienlose und substratlose biegsame Einheit, deren Flächenausdehnung 23 lediglich durch die gedruckten Schichten definiert ist.

Der zweite Schichtenstapel mit den Schichten 7, 33 und/oder 34 besitzt vorzugsweise eine andere, größere Flächenausdehnung als der erste gedruckte (Teil-)Schichtenstapel 10 des Sicherheitsetiketts 20; er kann ein beliebiges herkömmliches weiteres Etikett 30, beispielsweise einen vorhandenen Bestandsetikett oder ein zum Verbinden mit dem Schichtenstapel 10 bestimmtes Teiletikett, insbesondere ein Oberetikett 31 sein. Im Beispiel der Figur 8 umfasst das weitere Etikett 30 eine eigene Folie, beispielsweise eine Kunststoff-oder Papierfolie. Vorzugsweise ist die Folie eine Bröselfolie 33 besonders geringer (lateralcr) Reißfestigkeit und/oder (gegenüber Zugkräften in Richtung senkreeht zur Flächcnausdehnung) Trennfestigkeit, die bei mechanischer Einwirkung ebenfalls zerstörungsanfällig ist. Beim Aufkaschieren des weiteren Etiketts 30 auf den gedruckten Schichtenstapel 10 bzw. den Chip 8;9 entsteht ein Verbundetikett 40. An seiner Unterseite haftet die unterseitige Oberfläche l0a noch auf dem Interim-Trägersubstrat 61. Seitlich außerhalb der Flächenausdehnung 23 des ersten Schichtenstapels 10 reicht jedoch die Transferklebstoffschicht 7 des oberen Teiletiketts 30 bis auf das Trägersubstrat 61, d.h. dessen Antihaftschicht 62 hinab. Das Oberetikett 30 ist somit in einem Flächenbereich, der die Flächenausdehnung 23 des gedruckten Schichtenstapels 10 umläuft, unterseitig klebend ausgebildet; dieser Flächenbereich ist oder umfasst vorzugsweise einen Randbereich 19 oder einen oder mehrere Randbereiche 19 oder zumindest Eckbereiche 18 des Verbundetiketts. Die beim automatischen Verspenden oft größeren Kräften ausgesetzten Ränder und Ecken des Verbundetiketts 40 werden durch das seitlich hervorstehende Oberetikett 31 bzw. weitere Etikett 30 entlastet. Nach dem Entfernen des Interim-Trägersubstrats 61, 62 liegt die durch die Transferlackschicht 1;11 gebildete Unterseite 10a des Schichtenstapels 10 lose auf dem etikettierten Gegenstand auf. Außerhalb seiner Flächenausdehnungen 23 des Schichtenstapels 10 ist die Klebstoffschicht 7 des weiteren Etiketts 30 auf den Gegenstand aufgeklebt. Die Breite und sonstige Form solcher unterseitig klebenden Bereiche des Verbundetiketts 40 werden mit Hilfe eines zusätzlichen Stanzvorgangs, der nach dem Kaschieren beider Teiletiketten aufeinander durchgeführt wird, festgelegt; die Stanze ist dabei breiter als der Druckschichtaufbau des ersten Schichtenstapels 10. An der unteren Oberfläche 10a bzw. Grenzfläche 10b des Schichtenstapels 10 kann wiederum ein geeigneter Release-Wert R1 eingestellt werden, etwa durch geeignete Materialwahl für die erste Lackschicht 1 bzw. Transferlackschicht 11.

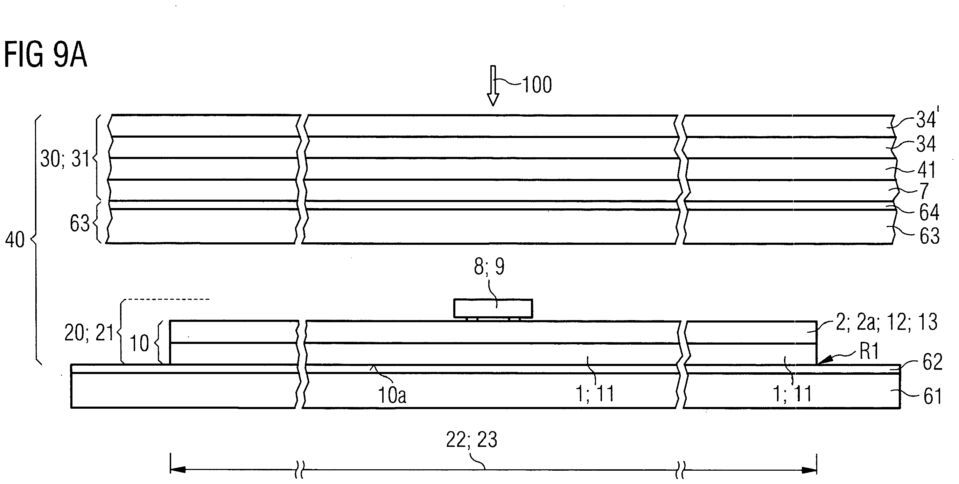

Figur 9A zeigt ein weiteres Ausführungsbeispiel eines Verbundetiketts 40, bestehend aus dem anmeldungsgemäßen Druckschichtetikett 20 und einem weiteren, oberen Teiletikett 30, welches ein etiketteneigenes, integriertes Etikettensubstrat 41 (Papierfolie oder vorzugsweise Kunststofffolie) aufweist. Der Schichtenstapel 10 des Sicherheitsetiketts 20 umfasst zumindest eine erste Lackschicht 1, etwa eine Transferlackschicht 11, und mindestens eine Leiterbahnschicht 2, die beispielsweise zu einer oder mehreren Leiterbahnen 2a, 2b, etwa als Antenne 12 und/oder Messleitung 13 bzw. Sensorleitung strukturiert ist. Zusätzlich können eine oder mehrere Druckfarbschichten und/oder eine zusätzliche Stabilisierungslackschicht vorgesehen sein (nicht dargestellt). Nach dem drucktechnischen Herstellen des Schichtenstapels 10 wird die unterseitige Klebstoffschicht 7 des weiteren Etiketts 30, welches als Oberetikett 31 oder jedenfalls äußeres Teiletikett dienen kann, von seinem unterseitigen Interim-Trägersubstrat 63 bzw. dessen Antihaftschicht 64 abgezogen und auf den Schichtenstapel 10 und/oder den Chip 8;9 aufkaschiert. Das weitere Etikett 30 kann über der Klebstoffschicht 7 und dem Etikettensubstrat 41 optional noch eine oder mehrere (vorzugsweise strukturierte) Druckfarbschichten 34; 34' beispielsweise in mindestens zwei verschiedenen Farben aufweisen. Auch jedes bereits vorhandene, d.h. im Bestand bevorratete Etikett kann als weiteres Etikett 30 mit dem anmeldungsgemäßen, lediglich druckschichtbasierten Sicherheitsetikett 20 verbunden, etwa aufkaschiert werden, um das Verbundetikett 40 zu erhalten. Vorzugsweise ist das weitere Etikett 30 flächenmäßig größer als, insbesondere mindestens doppelt oder mindestens viermal so groß wie das Sicherheitsetikett 20 und umgibt dessen Flächenausdehnung 23 und/oder Stanzkontur 22 allseitig umlaufend. Das Sicherheitsetikett 20 hingegen ist oben und unten ohne eigene Klebstoffschicht ausgebildet und unterseitig gemäß einer genügend großen Trennkraft (Release-Wert R1) gestaltet, um beim Abziehen von dem Trägersubstrat 61 den Zusammenhalt des Schichtenstapels 10 nicht zu gefährden.

Das unter der Klebstoffschicht 7 des weiteren Etiketts 30 (vorzugsweise größerer Flächenabmessung als das folienlose und klebstofflose Sicherheitsetikett 20) angeordnete Interim-Trägersubstrat 63, 64 kann vorübergehend entfernt werden, um die Klebstoffschicht 7 mit einer Seite des Schichtenstapels 10 des Sicherheitsetiketts 20 und/oder mit dem Chip 8;9 zu verkleben. Dabei verbleibt das Sicherheitsetikett 20 zunächst auf seinem eigenen Interim-Trägersubstrat 61;62; letzteres besitzt jedoch vorzugsweise eine Flächenabmessung, die nicht nur größer ist als diejenige des Sicherheitsetiketts 20, sondern auch größer ist als diejenige des weiteren Etiketts 30, damit beim Kaschieren beider Teiletiketten 20, 30 aufeinander die seitlich überstehenden Flächenbereiche der Unterseite der Klebstoffschicht 7 zwischenzeitlich bedeckt und geschützt bleiben, und zwar durch das erste Trägersubstrat 61, 62. Nachdem beide Teiletiketten 20;30 zum Verbundetikett 40 vereinigt sind, kann bis zu dessen Verspenden wahlweise das Trägersubstrat 61;62 des Sicherheitsetiketts 20 unter dem Verbundetikett 40 verbleiben oder alternativ wieder abgezogen werden, um wieder das ursprüngliche Trägersubstrat 63, 64 auf die Klebstoffschicht 7 und das darauf von unten haftende Sicherheitsetikett 20 von unten her aufzubringen. Zum Verspenden des Vcrbundctikctts 40 wird das beibehaltene Trägersubstrat 61 bzw. 63 entfernt und die freigelegte Unterseite auf die Oberfläche eines Gegenstandes aufgeklebt. Dabei bildet das eigentliche Sicherheitsetikett 20 ein folienloses und substratloses Druckschichtetikett und im Übrigen ein klebstofffreies Teiletikett ohne eigene Klebstoffschicht. Am etikettierten Gegenstand füllt es eine Tasche unterhalb des weiteren (Ober-)Etiketts 30 aus und liegt unterseitig nur lose auf dem Gegenstand auf.

Sofern das Verbundetikett 40 als Wicklungsetikett, insbesondere als Überrundumetikett gestaltet ist, kann die Innenseite des Sicherheitsetiketts auch auf einer inneren Wicklung des Oberetiketts oder auf einem sonstigen Flächenbereich von diesem lose aufliegen. In diesem Fall bildet es eine Tasche innerhalb eines mehrmals umwickelten weiteren Etiketts 30, das den etikettierten Gegenstand umgibt. Der Release-Wert R1 bzw. die Trennkraft an der unteren, d.h. inneren Oberfläche l0a wird wiederum geeignet gewählt. Das Sicherheitsetikett 20 bildet eine gedruckte, biegsame Einheit mit eigener Stanzkontur 22 bzw. Flächenausdehnung 23, die vorzugsweise verschieden von, insbesondere kleiner ist als diejenige des weiteren Etiketts 30 bzw. Oberetiketts 30.

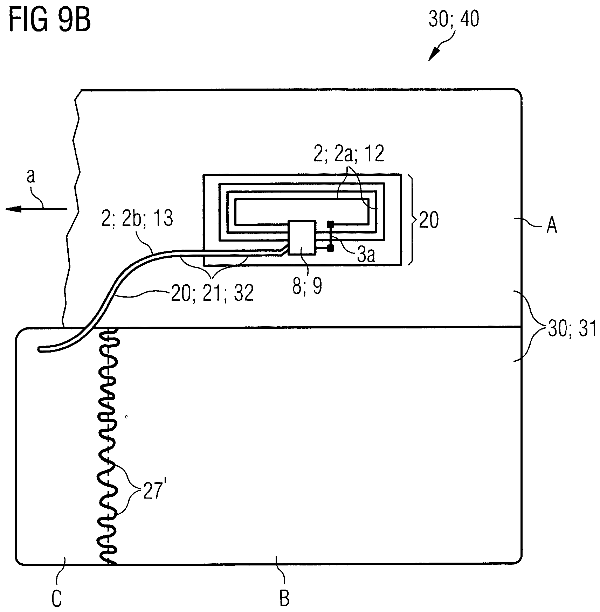

Figur 9B zeigt ein denkbares Ausfiihrungsbeispiel hinsichtlich der Flächenausdehnung eines anwendungsgemäßen Sicherheitsetiketts 20 und eines weiteren Etiketts 30, die zu einem Verbundetikett 40 verbunden sind. Der Schichtaufbau des Sicherheitsetiketts kann wie in Figur 9A oder gemäß einer beliebigen sonstigen Figur oder Ausführungsform der Anmeldung gewählt sein. Gleiches gilt für den Schichtaufbau des weiteren Etiketts, soweit in den weiteren Ausführungsformen ein solches weiteres Etikett vorkommt. Der Schichtaufbau des Sicherheitsetiketts 20 und derjenige des weiteren Etiketts 30 bzw. des Oberetiketts 31 können auch aus unterschiedlichen Ausführungsformen der Anmeldung entnommen und miteinander kombiniert werden. Gemäß Figur 9B ist das Verbundetikett 40 oder zumindest das weitere Etikett 30 (Oberetikett; Außenetikett) ein Wicklungsetikett, nämlich ein Überrundumetikett zum Umwickeln eines Pens, beispielsweise eines Insulinpens, einer Spritze oder einer sonstigen medizinischen Vorrichtung zur Injektion, Verabreichung oder Entnahme von Flüssigkeit, Medikamentenlösungen oder Blut. Das Etikett 30; 40 kann ferner ein Überrundumetikett zum Umwickeln eines Stiftes oder sonstigen stiftförmigen, länglichen und vorzugsweise zylindrischen Gegenstands oder Behälters sein. Im Falle eines medizinischen Autoinjektors entsprechen die in Figur 9B dargestellten Flächenaufteilungcn und Flächcnvcrhältnissc schon sehr weitgehend einer möglichen Rcalisicrungsform eines einsatzfähigen Überrundumetiketts.

Gemäß Figur 9B ist die Fläche des weiteren Etiketts 30 in drei Flächenabschnitte A, B, C unterteilt. In Flächenabschnitt A ist unten das Sicherheitsetikett 20 (oder jedenfalls der überwiegende Teil davon) unter die Klebstoffschicht 7 (Figur 9A) geklebt. Der im Flächenabschnitt A befindliche Bereich des Sicherheitsetiketts 20 und seines Schichtenstapels 10 umfasst insbesondere einen Flächenbereich, in welchem der Chip 8; 9 und eine aus einer oder mehreren Leiterbahnen 2a, 3a gebildete Antenne 12 untergebracht ist; ferner den überwiegenden Teil einer Sensorleitung oder Messleitung 13, die bogenförmig (in Figur 9B nach links unten) von dem Chip und dem durch die Antenne umgebenen Bereich weg führt. Der Flächenabschnitt A ist zum einfachen, d.h. genau einmaligem Umwickeln des Umfangs des Injektionspens oder sonstigen Gegenstandes bestimmt; hierzu dient die Klebstoffschicht 7 des Oberetiketts 30. Die Flächenabschnitte B und C bilden eine zweite, äußere Umwicklung, wobei die Unterseite des Flächenabschnitts B auf der Oberseite, d.h. Außenseite des Flächenabschnitts A zu liegen kommt; beide Flächenabschnitte werden durch die unterseitige Klebstoffschicht 7 des Flächenabschnitts B zusammengehalten. In axialer Richtung a (nach links in Figur 9B) besitzt das Etikett 30; 40 einen endseitigen, vorstehenden Flächenabschnitt C, der beim Umwickeln unterseitig auf einer abnehmbaren, insbesondere abziehbaren Kappe (Verschlusskappe; Schutzabdeckung für eine integrierte oder ansetzbare Nadel oder Kanüle des Pens) zu liegen kommt und mittels der Klebstoffschicht 7 daran haftet. Durch eine geschwungene, gezackte oder anderweitig schwer reparierbare Stanzlinie 27' ist der Flächenabschnitt C, nachdem er zusammen mit der Kappe vom übrigen detektierten Grundkörper des Injektionsstiftes oder sonstigen Gegenstandes abgezogen wurde, nur schwer wieder ansetzbar, ohne sichtbare Erstöffnungsspuren zu hinterlassen.

Ein axiales Ende der Messleitung 13 des Sicherheitsetiketts, welches auch in Wicklungsrichtung gegenüber dem übrigen Teil des Sicherheitsetiketts 20 versetzt ist, ist im Flächenabschnitt C unter der Klebstoffschicht 7 angeordnet und wird beim Abziehen der Verschlusskappe durchgerissen, d.h. unterbrochen; das erstmalige Öffnen des Stiftes ist somit durch den Chip 8 elektrisch nachweisbar, etwa als unendlich hoher Widerstand bzw. verschwindender Leitwert entlang der Messleitung 13. Der Flächenabschnitt B des Etiketts 30; 40 überdeckt den Flächenabschnitt A; zumindest einer von ihnen kann in geeigneter Weise beschriftet sein, um den etikettierten Gegenstand mit den entsprechenden Informationen (Hersteller, Inhalt, Benutzerhinweise, Verfallsdatum, Produktnummer etc.) zu kennzeichnen. Eine Beschriftung in einem axial endseitigen Rand des Flächenabschnitts A, der erst beim Abziehen der Kappe und des Flächenabschnitts C freigelegt wird, kann darauf hinweisen, dass die Kappe zumindest einmalig entfernt wurde. Diese Beschriftung kommt zum Vorschein, wenn der Stift geöffnet ist.

Alternativ kann das Etikett 30; 40 auch derart in Flächenabschnitte A, B, C unterteilt und gestaltet sein, dass die Flächenabschnitte B, C eine innere, erste Umwicklung bilden, während der Flächenabschnitt A außen auf dem Abschnitt B aufliegt. Zumindest der Aufbau, insbesondere Schichtaufbau und die Flächenausdehnung des Sicherheitsetiketts 20 kann in beiden Fällen identisch gewählt sein. Für das Verbundetikett 40 können auch Etiketten, die gemäß anderen Ausführungsformen der Anmeldung (etwa hinsichtlich des Schichtaufbaus, der Flächenausdehnung oder anderer Merkmale) ausgebildet sind, für ein Verbundetikett 40 wie etwa in Figur 9B verwendet werden. Solche Sicherheitsetiketten 20 können auf Vorrat gefertigt und auf übergroßen Flächenabschnitten eines Interim-Trägersubstrats bevorratet werden, um später mit weiteren Ober- oder Teiletiketten 30 zu Verbundetiketten 40 verbunden zu werden.

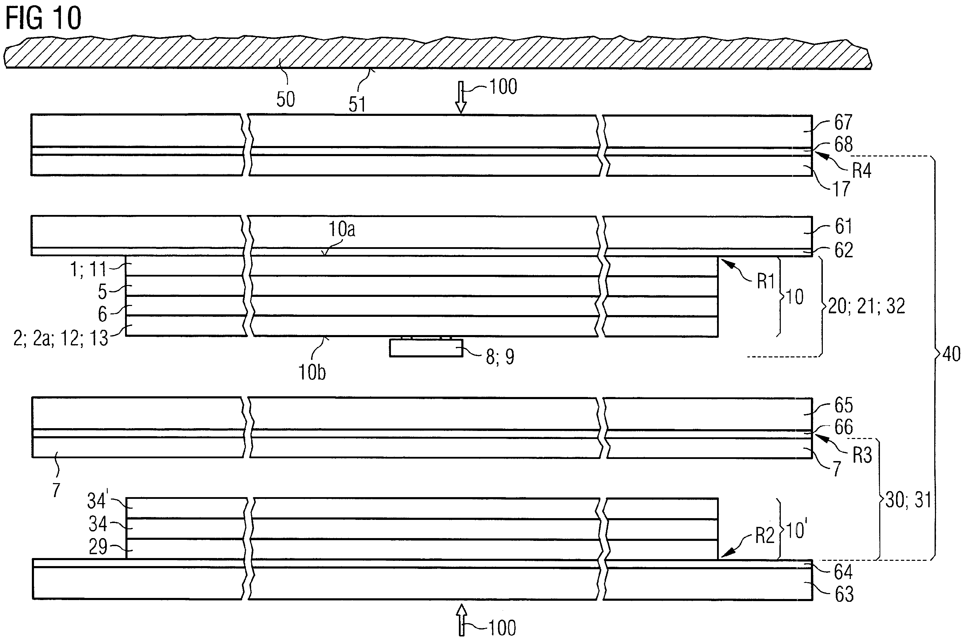

Figur 10 zeigt ein Ausführungsbeispiel eines beidseitig betrachtbaren, beidseitig beschriftbaren Etiketts, wie es beispielsweise für Windschutzscheiben von Fahrzeugen geeignet ist, etwa als Maut-Plakette für automatische Zugangskontrollsysteme (s. oben). Hinsichtlich des Flächenaufbaus, insbesondere der strukturierten Leiterbahnschicht 2, kann das Etikett beispielsweise gemäß einer der Figuren 1, 3, 4A oder 5 oder in sonstiger Weise aufgebaut sein. Vorzugsweise entspricht der laterale Verlauf der Leiterbahn 2a derjenigen in Figur 5; insbesondere für UHF-Funkantennen kann eine aus nur einer einzigen Leiterbahnschicht gefertigte Antenne 12 vorgesehen sein. Alternativ kann eine mehrlagige Antennenstruktur wie in Figur 4A und 4B in zwei Leiterbahnschichten 2, 3 gefertigt sein, beispielsweise für HF-Übertragungen. In Figur 10 ist jedoch die mindestens eine Leiterbahnschicht 2 der Übersichtlichkeit halber nicht weiter unterteilt. Weiterhin ist ihre laterale Struktur, ebenso wie diejenige optionaler Druckfarbschichten 5, 6 des Sicherheitsetiketts (sowie diejenige von optionalen Druckfarbschichten 34, 34' eines weiteren Etiketts 30, 31) nicht näher gekennzeichnet. Das Sichcrhcitsctikctt 20 und das weitere Etikett 30 dienen als Untcrctikctt 32 und Oberetikett 31 eines Verbundetiketts 40, zu welchem sie nach Ablösung entsprechender Liner bzw. Trägerfolien 61, 65, vereinigt werden. Figur 10 zeigt die dafür verwendeten Schichtverbunde vor deren Bearbeitung und Zusammenfügung. Das eigentliche, druckschichtbasierte Sicherheitsetikett 20 umfasst den Chip 8; 9 und den aus gedruckten Schichten gebildeten Schichtenstapel 10; zur Funktion und Beschaffenheit der einzelnen Schichten wird auf die Bezugszeichen und die zugehörigen Erläuterungen zu den übrigen Figuren verwiesen. Zusätzlich zum Druck des Hilfsetiketts 20 (mit anschließendem Bonden des Chips) wird auch das Oberetikett 31 gedruckt, etwa indem eine Transferlackschicht 29, eine erste Druckfarbschicht 34 (beispielsweise in roter Farbe) und eine weitere Druckfarbschicht 34' (etwa in weißer Farbe) nacheinander auf die Antihaftschicht 64 eines zweiten Trägersubstrats 63 aufgedruckt werden. Alle Trägersubstrate 61, 63, 65, 67 in Figur 10 sind lediglich Liner, d.h. Konfektionierungssubstrate, die nicht zum eigentlichen Etikett oder deren Bestandteil gehören. Mit Hilfe der Druckfarbschichten 34, 34' kann beispielsweise eine rote Beschriftung auf weißem Hintergrund ausgebildet werden, die von der Seite der transparenten Transferlackschicht 29 her lesbar ist, beispielsweise als Streudruck aus vielen über die Etikettenfläche verteilten identischen Schriftzügen, die z.B. auf die RFID-Funktion hinweisen.

Die Schichten 7 und 17 sind Klebstoffschichten zum Zusammenkleben und Aufspenden des Verbundetiketts 40, die auf eigenen Trägersubstraten 65, 67 bzw. deren Silikonschichten 66, 68 aufgebracht sind. Die auf der entgegengesetzten Seite der Klebstoffschichten 7, 17 zunächst vorgesehenen weiteren Klebstoffabdeckungen sind in Figur 10 nicht dargestellt. Zum Zusammenfügen des Verbundetiketts 40 wird die Klebstoffschicht 7 auf den auf die zweite Trägerfolie 63 gedruckten Schichtenstapel aufkaschiert und dann die dritte Trägerfolie 65 entfernt. Die Schichten 29 und 7 sind so beschaffen, dass der Release-Wert R2 (bzw. die Trennkraft) der Transferlackschicht 29 größer ist als derjenige R3 der Klebstoffschicht 7. Der Release-Wert R2 ist ebenfalls größer als die Release-Werte R1 und R4 der ersten Oberfläche 10a des Sicherheitsetiketts 20 und der zum Aufspenden noch benötigten Klebstoffschicht 17. Dadurch ist gewährleistet, dass das Trägersubstrat 63 auf der Oberseite des Oberetiketts 31 (unten in Figur 10) als letztes entfernt wird. Nach dem Abziehen des Trägersubstrats 65 wird das bereits zusammengefügte Oberetikett 31 auf den Chip und/oder die zweite Oberfläche 10b des Schichtenstapels 10 des Sicherheitsetiketts 20 aufkaschicrt, wobei das Obcrctikctt nicht zwangsläufig überstehen muss. Dann wird die erste Trägerfolie 61 von der entgegengesetzten, ersten Oberfläche 10a des Sicherheitsetiketts 20 entfernt und darauf die weitere Klebstoffschicht 17 aufkaschiert; dadurch ist das Verbundetikett 40 zwischen den Trägersubstraten 63, 67 fertiggestellt. Der Benutzer des Etiketts entfernt zunächst die Trägerfolie 67 und klebt das Verbundetikett 40 mit der freigelegten Klebstoffschicht 17 auf die Oberfläche 51 eines Gegenstandes 50, beispielsweise auf eine Windschutzscheibe auf. Dann wird die oberseitige Trägerschicht 63 (die die höchste Trennkraft erfordert bzw. den größten Release-Wert besitzt) abgezogen; das verspendete Verbundetikett 40 ist nun funktionsbereit.

Das Größenverhältnis der Release-Werte R der beiden Transferlackschichten 11 und 29 sowie der beiden Klebstoffschichten 7, 17 ist vorzugsweise wie folgt: R2 ist größer als alle übrigen Release-Werte R1, R3 und R4, da das obere Trägersubstrat 63 des Oberetiketts 31 als letztes entfernt werden soll. Die übrigen drei Release-Werte R1, R3 und R4 können wahlweise gleich groß oder unterschiedlich groß gewählt sein. Vorzugsweise sind sie unterschiedlich groß; beispielsweise ist R3 größer als R1 und R1 größer als R4. Entscheidend ist lediglich, dass der Release-Wert R2 der untersten bzw. später außen liegenden Lackschicht 29 des Oberetiketts einen größeren Release-Wert R2 besitzt als die Release-Werte R3, R1 und R4 der Schichten 7, 11 und 17, von denen (nach sukzessiven Kaschieren auf den vom Trägersubstrat 63 getragenen Etikettenteil) jeweils ein weiteres Trägersubstrat 65, 61, 67 abzulösen ist, möglichst ohne das Trägersubstrat 63 zu lösen. Anders als bei herkömmlichen Etiketten mit integrierter, etiketteigener Papier- oder Kunststofffolie besitzen die hier vorgestellten Etiketten kein über ihre Grundfläche bzw. Flächenausdehnung ganzflächiges Etikettensubstrat, das einen integrierten bzw. integralen Bestandteil des Etiketts bilden würde. Daher sind auch die hier vorgestellten Druckschichtetiketten etwa an Randbereichen, in denen sonst Anfasslaschen vorgesehen wären, nicht ohne weiteres separat von benachbarten, konfektionierungsbedingten Trägerschichten (Linern) getrennt greifbar und trennbar; vielmehr sind im Wesentlichen zwei eng benachbarte Trägersubstrate zu handhaben, d.h. zu trennen.

Da alle konfektionierungsbedingten Trägersubstrate (Liner) entfernt wurden, weist das Verbundetikett keine Papier- oder Kunststofffolien im Schichtverbund auf, sondern lediglich Druckschichten und natürlich den Chip. Dadurch sind Etikettenschichtdicken des Verbundctikctts von weniger als 30 µm erzielbar, was deutlich flacher ist als herkömmliche Etiketten oder Inlays auf der Basis von Folien etwa aus PET (Polyethylenterephthalat), deren Dicke regelmäßig 40 µm übersteigt und durch zusätzliche Dekorfolien noch weitaus dicker wird. Dank ihrer geringen Gesamthöhe, d.h. Schichtdicke sind die druckschriftbasierten Etiketten der Ausführungsbeispiele dieser Anmeldung besonders geeignet, um innen oder außen herum um Ecken oder Kanten von Gegenständen oder von Paketen und Verpackungen aufgespendet zu werden; durch das Fehlen massiver Folien im Schichtaufbau schmiegt sich das jeweilige Etikett eng an gebogene Oberflächen auch mit sehr geringen kleinsten Radien von einem oder einigen Millimetern, insbesondere an Kanten von Gegenstände an, ohne dass sich Teilflächen des Etiketts von alleine wieder aufstellen oder abstellen würden, wie es bei folien- oder papierbasierten herkömmlichen Etiketten oft der Fall ist. So sind beispielsweise Spritzen oder Injektionsstifte mit einem Durchmesser von 1 cm und weniger problemlos umklebbar.

Die Schichtdicken der gedruckten Schichten in den Figuren der Anmeldung sind nicht maßstabsgerecht dargestellt. In der Praxis kann jede beliebige gedruckte Schicht eine jeweilige Dicke von zwischen 0,5 und 100 µm, beispielsweise im Bereich zwischen 5 und 30 µm aufweisen. Die Schichtdicke der gedruckten Schichten (vgl. die entsprechenden Bezugszeichen) könnte beispielsweise jeweils 15 µm betragen. Die Druckschichten sind vorzugsweise unter UV-Strahlung aushärtend und dadurch leicht skalierbar und mit hoher Durchsatzrate produzierbar; alternativ kommen auch lösungsmittelbasierte Druckfarben in Betracht. Die Klebstoffschichten 7 bzw. 17 sind vorzugsweise relativ dünn; ihre Schichtdicke liegt beispielweise zwischen 10 und 30 µm. Die nur vorübergehend bis zum Verspenden oder Zusammenfügen aufgebrachten Liner bzw. Trägersubstrate sind in der Regel deutlich dicker als die Druckschichten und Klebstoffschichten. Im Übrigen sind für die strukturierten Leiterbahnen transparente leitfähige Drucklacke verwendbar, etwa um transparente Antennen, Messleitungen oder sonstiges Leiterbahnen zu fertigen. Solche flüssig verdruckbaren Lacke können wahlweise metallische Leiter (etwa Silber, z.B. zum Drucken von Nanodrähten aus Silber) oder anderweitig leitfähige Materialien, beispielsweise leitfähige Polymere enthalten.

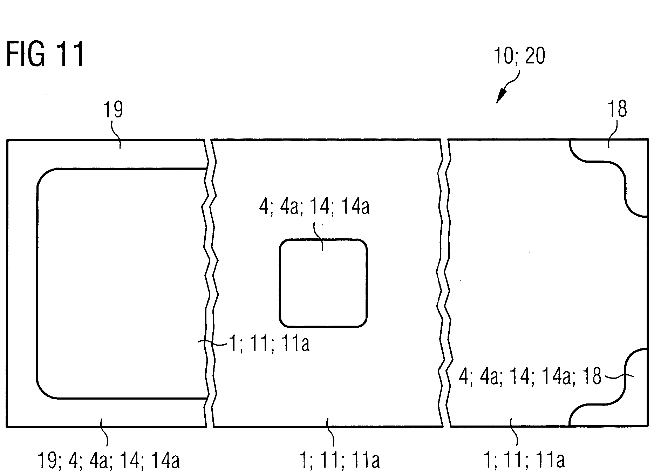

Figur 11 zeigt in schematischer Draufsicht auf drei verschiedene Teilbereiche einer beliebigen gedruckten Schicht des Schichtenstapels 10, dass auch andere Schichten als die Leitcrbahnschicht 2 inhomogen, d.h. in unterschiedlichen Flächcnbcrcichcn derselben Schicht oder Schichtenebene unterschiedlich ausgebildet sein können. Dank der drucktechnischen Herstellung des Schichtenstapels können nicht nur Druckfarbschichten, sondern auch die übrigen Bestandteile (Lacke jeder Art) selektiv in ausgewählten Flächenbereichen der jeweiligen Schichtenebene verdruckt werden, ggfs. auch in unterschiedlichen Schichtdicken und/oder aus verschiedenen oder identischen Materialien. Durch die einander ergänzenden, additiv bzw. gemeinsam den Schichtenstapel und deren einzelne Schichtenebenen aufbauenden verdruckten Materialien (verdruckbare Flüssigkeiten) lässt sich nahezu jeder gewünschte, dreidimensional strukturierte Aufbau realisieren. Innerhalb einer Schichtenebene können verschiedene Farben oder sonstige Materialien passgenau zueinander verdruckt werden, beispielsweise unterschiedliche Materialien verschieden hoher Festigkeit (Trennfestigkeit; Reißfestigkeit) in verschiedenen Flächenbereichen einer oder mehrerer Druckschichtebenen auszubilden. So können auch Schwächungsstrukturen, ohne dass Sicherheitsstanzungen nötig sind, in Schichtenstapel gebildet werden. Ferner können in verschiedenen Flächenbereichen einer Schichtenebene Materialien unterschiedlich hoher Leitfähigkeit dieser Materialien im ausgehärteten Zustand (z.B. ein permanent leitfähiger Lack umgeben von einem permanent nichtleitenden, d.h. isolierenden Lack) verdruckt werden, insbesondere um Leiterbahnen unterschiedlicher Schichtebenen miteinander zu verbinden. Insbesondere können zusätzlich zu lateral verlaufenden Leiterbahnen auch Vias (d.h. Kontaktlochfüllungen zur Durchkontaktierung zwischen verschiedenen Schichtenebenen) drucktechnisch hergestellt werden.

Figur 11 zeigt in der Draufsicht drei verschiedene Beispiele für eine lateral inhomogen verdruckte Schicht; z.B. der untersten Schicht direkt auf der Antihaftbeschichtung des Trägersubstrats für den Schichtenstapels 10 des Sicherheitsetiketts 20. Links in Figur 11 ist ein besonders verstärkter Randbereich 19 aus einem anderen Material und/oder in einer anderen Schichtdicke als dem Transferlack 11a der Transferlackschicht 11 gebildet; insbesondere ist eine Stabilisierungsschicht 4 (Stabilisierungslack 4a) oder sonstige Verstärkungsschicht 14 (Verstärkungslack 14a) entlang eines oder mehrerer Randbereiche verdruckt, vorzugsweise in beim Verspenden stärker belasteten Außenbereichen der Grundfläche des Schichtenstapels. Rechts in Figur 11 sind selektiv nur Eckbereiche 18 in dieser Weise aus einem anderen Lack 4a; 14a und/oder in anderer Schichtdicke verdruckt. In der mittleren Ausführungsform in Figur 11 ist in einem z.B. mittleren Flächenbereich, der später der Flächcnposition des Chips entspricht, eine solche Vcrstärkungsschicht 4; 14 aus einem Lack 4a; 14a vorgesehen. Alle drei in Figur 11 zusammengefassten Ausführungsformen sind miteinander kombinierbar. Derartige inhomogene Flächenverteilungen sind auch im Schichtenstapel 10' eines weiteren Etiketts 30, insbesondere Überetiketts 31, oder bei Klebstoffschichten 7; 17 realisierbar. Im einem Verbundetikett 40 ermöglicht das Hilfsetikett ferner eine variablere Positionierung und Flächengestaltung elektrischer Leiterbahnen 2a; 2b; 3a unabhängig vom Verlauf und den Positionen von Stanzlinien und anderen Stanzstrukturen, ohne dass die Gefahr besteht, beim Stanzen vorhandene Leiterbahnen zu beschädigen.

### Bezugszeichenliste

- 1: erste Lackschicht
- 1a: Isolationsschicht
- 2: Leiterbahnschicht
- 2a; 2b: Leiterbahn
- 3: Leiterbahnschicht
- 3a: Leiterbahn
- 4: Stabilisierungslackschicht
- 4a: Stabilisierungslack
- 5: erste Druckfarbschicht
- 6: zweite Druckfarbschicht
- 7: Klebstoffschicht
- 8: Chip
- 9: RFID-Chip
- 10: Schichtenstapel
- 10a: erste Oberfläche
- 10b: zweite Oberfläche
- 11: Transferlackschicht
- 11a: Transferlack
- 12: Antenne
- 12a: erster Anschluss
- 12b: zweiter Anschluss
- 12c: Brückenleitung
- 13: Messleitung
- 13a: erster Anschluss
- 13b: zweiter Anschluss
- 14: Verstärkungslackschicht
- 14a: Verstärkungslack
- 16: Kontaktlochfüllung
- 17: Klcbstoffschicht
- 18: Eckbereich
- 19: Randbereich
- 20: Sicherheitsetikett
- 21: Teiletikett
- 22: Stanzkontur
- 23: Flächenabmessung
- 26: Stützsubstrat
- 27; 27': Stanzlinie
- 28: Aussparung
- 29: Transferlackschicht
- 30: weiteres Etikett
- 31: Oberetikett
- 32: Unteretikett
- 33: Bröselfolie
- 34; 34': Druckfarbschicht
- 40: Verbundetikett
- 41: Etikettensubstrat
- 50: Gegenstand
- 51: Oberfläche
- 60: Konfektionsware
- 61: erstes Trägersubstrat
- 62: erste Antihaftschicht
- 63: zweites Trägersubstrat
- 64: zweite Antihaftschicht
- 65: drittes Trägersubstrat
- 66: dritte Antihaftschicht
- 67: viertes Trägersubstrat
- 68: vierte Antihaftschicht
- 100: Betrachtungsrichtung
- a: axiale Richtung
- A, B, C: Flächenabschnitt
- I: erster Flächenbereich
- II: zweiter Flächcnbcrcich
- R: Release-Wert

## Patentansprüche

1. Sicherheitsetikett (20) zum Nachweis missbräuchlicher
Manipulationsversuche,
wobei das Sicherheitsetikett (20) Folgendes umfasst:
- einen Chip (8), insbesondere einen RFID-Chip (9),
**gekennzeichnet durch**
- einen zerstörungsanfälligen, gedruckten Schichtenstapel (10), der zumindest eine aus einem gedruckten Lack bestehende erste Lackschicht (1) und mindestens eine strukturierte, gedruckte Leiterbahnschicht (2), durch die mindestens eine den Chip (8) elektrisch kontaktierende und/oder kapazitiv und/oder induktiv an den Chip (8) koppelbare Leiterbahn (2a) ausgebildet ist, aufweist,
- wobei das Sicherheitsetikett (20) zumindest im überwiegenden Teil seiner Flächenausdehnung als substratloses, folienloses und papierloses Etikett oder Teiletikett (21) ausgebildet ist und
- wobei der zerstörungsanfällige Schichtenstapel (10) bei zumindest teilweisem Ablösen von einem damit etikettierten Untergrund oder Gegenstand eine irreversible, elektrisch nachweisbare Unterbrechung, Beschädigung und/oder Zerstörung der mindestens einen Leiterbahn (2a) herbeiführt.

2. Sicherheitsetikett nach Anspruch 1,
**dadurch gekennzeichnet, dass** der zerstörungsanfällige, gedruckte Schichtenstapel (10) zumindest eine oder mehrere Schichten aufweist, deren Reißfestigkeit und/oder Trennfestigkeit so gering ist, dass in Folge der geringen Reißfestigkeit und/oder Trennfestigkeit des Sicherheitsetiketts (20) die mindestens eine Leiterbahn (2a) bei zumindest teilweisem Ablösen des Schichtenstapels (10) unterbrochen, beschädigt und/oder zerstört wird.

3. Sicherheitsetikett nach Anspruch 1 oder 2,
**dadurch gekennzeichnet, dass** auf einer Seite (10b) des Schichtenstapels (10) und/oder des Chips (8) eine gedruckte Klebstoffschicht (7) aufkaschiert, auflaminiert oder in sonstiger Weise aufgebracht ist.

4. Sicherheitsetikett nach Anspruch 3,
**dadurch gekennzeichnet, dass** der Schichtenstapel (10) auf einer von der Klebstoffschicht (7) abgewandten Oberfläche (10a) oder Grenzfläche eine gedruckte Schicht (1; 11) aufweist, deren Release-Wert (R1) und/oder Trennkraft gegenüber einer Antihaftschicht, insbesondere Silikon größer ist als der Release-Wert (R2) und/oder die Trennkraft der Klebstoffschicht (7) gegenüber einer Antihaftschicht, insbesondere Silikon.

5. Sicherheitsetikett nach Anspruch 3 oder 4,
**dadurch gekennzeichnet, dass** der gedruckte Schichtenstapel (10) auf einer von der Klebstoffschicht (7) abgewandten Oberfläche (10a) oder Grenzfläche von einer antihaftbeschichteten Oberfläche, insbesondere von Silikon schwerer abziehbar ist als die Klebstoffschicht (7), aber leichter von einer antihaftbeschichteten Oberfläche abziehbar ist als die Klebstoffschicht (7) von einer nicht-antihaftbeschichteten Oberfläche.

6. Sicherheitsetikett nach einem der Ansprüche 1 bis 5,
**dadurch gekennzeichnet, dass** der gedruckte Schichtenstapel (10) auf einer von dem Chip (8) abgewandten Seite eine Oberfläche (10a) und/oder Grenzfläche aufweist, die nach dem Verspenden des Sicherheitsetiketts (20) auf einen Gegenstand entweder an der Luft freiliegt oder auf dem Gegenstand oder auf einem Flächenabschnitt (B) eines um den Gegenstand gewickelten weiteren Etiketts (30), Teiletiketts oder Oberetiketts (31) aufliegt.

7. Sicherheitsetikett nach einem der Ansprüche 1 bis 6,
**dadurch gekennzeichnet, dass** das Sicherheitsetikett (20) ein beidseitig mit abziehbaren Trägersubstraten (61, 63), insbesondere mit abziehbaren Trägerfolien konfektioniertes, selbst jedoch ein substratloses, folienloses und papierloses Etikett oder Teiletikett (21) ist.

8. Sicherheitsetikett nach einem der Ansprüche 1 bis 7,
**dadurch gekennzeichnet, dass** der gedruckte Schichtenstapel (10) des Sicherheitsetiketts (20) ein zerstörungsanfälliges und/oder gegenüber Zugkräften, Schwerkräften und/oder Biegebeanspruchungen nachgiebiges Teiletikett (21) mit eigener Stanzkontur (22) ist.

9. Sicherheitsetikett nach einem der Ansprüche 1 bis 8,
**dadurch gekennzeichnet, dass** das Sicherheitsetikett (20) und/oder der Schichtenstapel (10) ein zerstörungsanfälliges Teiletikett (21) ist, das zum Verspenden im Verbund mit einem weiteren Etikett (30), insbesondere einem Oberetikett (31) bestimmt ist.

10. Sicherheitsetikett nach einem der Ansprüche 1 bis 9,
**dadurch gekennzeichnet, dass** die erste Lackschicht (1) des gedruckten Schichtenstapels (10) eine Transferlackschicht (11) ist und dass der gedruckte Schichtenstapel (10) außer der mindestens einen strukturierten Leiterbahnschicht (2; 3) zumindest noch eine Stabilisierungslackschicht (4) und/oder eine oder mehrere Druckfarbschichten (5, 6) aufweist.

11. Sicherheitsetikett nach einem der Ansprüche 1 bis 10,
**dadurch gekennzeichnet, dass** der zerstörungsanfällige, gedruckte Schichtenstapel (10) zumindest eine inhomogene Schicht oder inhomogene Schichtenebene aufweist, die sich in unterschiedlichen Bereichen der lateralen Flächenausdehnung des Schichtenstapels (10) aus verschiedenen verdruckten Materialien zusammensetzt, wobei in einem ersten Flächenbereich (I) ein elektrisch leitfähiges Material in Form mindestens einer Leiterbahn (2a) verdruckt ist und in mindestens einem zweiten Flächenbereich (II) ein anderes, nicht leitfähiges oder nicht mehr leitfähiges Material verdruckt ist.

12. Sicherheitsetikett nach einem der Ansprüche 1 bis 11,
**dadurch gekennzeichnet, dass** der gedruckte Schichtenstapel (10) mindestens selektiv in Teilbereichen seiner Flächenabmessung, vorzugsweise selektiv im der Nähe des Chips (8), in Eckbereichen (18) und/oder in Randbereichen (19) des Schichtenstapels (10) eine verdruckte, elektrisch isolierende Stabilisierungsschicht (4) und/oder sonstige Verstärkungslackschicht (14) aufweist.

13. Sicherheitsetikett nach einem der Ansprüche 1 bis 12,
**dadurch gekennzeichnet, dass** das Sicherheitsetikett (20) ein Stützsubstrat (26) aufweist, das den Schichtenstapel (10) in der Nähe des Chip (8) stützt und/oder stabilisiert und eine Flächcnabmcssung besitzt, die höchstens 20 %, vorzugsweise höchstens 10 % der Flächenabmessung des Schichtenstapels (10) beträgt.

14. Konfektionsware (60) zur Konfektionierung einer Vielzahl von Sicherheitsetiketten (20) nach einem der Ansprüche 1 bis 13,
- wobei die Konfektionsware (60) ein antihaftbeschichtetes, zerteilbares, als Rolle oder Bogen vorliegendes erstes Trägersubstrat (61), eine Mehrzahl von Sicherheitsetiketten (20) nach einem der Ansprüche 1 bis 13 und ein oder mehrere zweite Trägersubstrate (63) aufweist,
- wobei die Sicherheitsetiketten (20) mit einer ersten Oberfläche (10a) ihrer jeweiligen Schichtenstapel (10) auf das ersten Trägersubstrat (61) aufgebracht sind,
- wobei das oder die zweiten Trägersubstrate (63) auf einer entgegengesetzten Oberfläche (10b) der Sicherheitsetiketten (20) und/oder der Schichtenstapel (10) angeordnet sind und
- wobei der Release-Wert und/oder die Trennkraft der ersten Oberfläche (10a) des jeweiligen Sicherheitsetiketts (20) zum Abziehen von dem ersten Trägersubstrat (61) verschieden groß im Vergleich zu, insbesondere größer ist als der Release-Wert und/oder die Trennkraft der zweiten Oberfläche (10b) des jeweiligen Sicherheitsetiketts (20) zum Abziehen von dem oder den zweiten Trägersubstraten (63).

15. Verbundetikett (40), umfassend
- ein Sicherheitsetikett (20) nach einem der Ansprüche 1 bis 13 und
- ein weiteres Etikett (30), das eine andere Stanzkontur oder Flächenabmessung als das Sicherheitsetikett (20) besitzt,
- wobei das weitere Etikett (30) ein etiketteneigenes, integriertes Etikettensubstrat (41), insbesondere eine integrierte Etikettenfolie aufweist, wohingegen das Sicherheitsetikett (20) in seinem überwiegenden Flächenbereich ohne eigenes Etikettensubstrat ausgebildet ist, und
- wobei das Sicherheitsetikett (20) dauerhaft mit dem weiteren Etikett (30) verklebt ist.

## Claims

1. A security label (20) for detecting improper manipulation attempts,
the security label (20) comprising the following:
- a chip (8), in particular an RFID-chip (9), **characterized by**
- a printed layer stack (10) which is prone to destruction and comprises at least one first varnish layer (1) consisting of a printed varnish and at least one structured, printed conductor track layer (2), by means of which at least one conductor track (2a) is formed which electrically contacts the chip (8) and/or can be capacitively and/or inductively coupled to the chip (8),
- the security label (20) being formed, at least in the major part of its surface extent, as a substrate-free, film-free and paper-free label or partial label (21) and
- the layer stack (10) prone to destruction, if it is at least partially removed from a ground or object labeled with it, brings about an irreversible, electrically detectable interruption, damage and/or destruction of the at least one conductor track (2a).

2. The security label according to claim 1,
**characterized in that** the printed layer stack (10) prone to destruction comprises at least one or more layers, the tear resistance and/or separating resistance of which is so small that as a consequence of the low tear resistance and/or separating resistance of the security label (20), the at least one conductor track (2a) is broken, damaged and/or destroyed when the layer stack (10) is at least partially removed.

3. The security label according to claim 1 or 2,
**characterized in that** a printed adhesive layer (7) is applied on one side (10b) of the layer stack (10) and/or of the chip (8) by coating, laminating or in any other way.

4. The security label according to claim 3,
**characterized in that** the layer stack (10) comprises a printed layer (1; 11) on a surface (10a) or boundary surface facing away from the adhesive layer (7), the release value (R1) and/or separating force of said printed layer with respect to an anti-stick layer, in particular silicone, being larger than the release value (R2) and/or separating force of the adhesive layer (7) with respect to an anti-stick layer, in particular silicone.

5. The security label according to claim 3 or 4,
**characterized in that** the printed layer stack (10), on a surface (10a) or boundary surface facing away from the adhesive layer (7), is more difficult to peel off from an anti-stick coated surface, in particular silicone, than the adhesive layer (7), but is easier to peel off from an anti-stick coated surface than the adhesive layer (7) from a non-anti-stick coated surface.

6. The security label according to any of the claims 1 to 5,
**characterized in that** the printed layer stack (10) comprises a surface (10a) and/or boundary surface on a side facing away from the chip (8), which after dispensing the security label (20) on an object is either exposed to air or lies on top of the object or a surface portion (B) of a further label (30), partial label or top label (31) wrapped around the object.

7. The security label according to any of the claims 1 to 6,
**characterized in that** the security label (20) is a label or partial label (21) prepared on both sides with peelable carrier substrates (61, 63), in particular peelable carrier films, but itself does not comprise any substrate, film and paper.

8. The security label according to any of the claims 1 to 7,
**characterized in that** the printed layer stack (10) of the security label (20) is a partial label (21) which has its own punch contour (22) and is prone to destruction and/or resilient with respect to tensile forces, gravitational forces and/or bending stresses.

9. The security label according to any of the claims 1 to 8,
**characterized in that** the security label (20) and/or the layer stack (10) is a partial label (21) which is prone to destruction and intended for dispensing together with a further label (30), in particular a top label (31).

10. The security label according to any of the claims 1 to 9,
**characterized in that** the first varnish layer (1) of the printed layer stack (10) is a transfer varnish layer (11) and **in that** the printed layer stack (10), apart from the at least one structured conductor track layer (2; 3), further comprises a stabilizing varnish layer (4) and/or one or more printing ink layers (5, 6).

11. The security label according to any of the claims 1 to 10,
**characterized in that** the printed layer stack (10) which is prone to destruction comprises at least one inhomogeneous layer or inhomogeneous layer plane which is composed of different printed materials in different areas of the lateral surface extent of the layer stack (10), with an electrically conductive material in the form of at least one conductor track (2a) being printed in a first surface area (I) and another, non-conductive or no longer conductive material being printed in at least one second surface area (II).

12. The security label according to any of the claims 1 to 11,
**characterized in that** the printed layer stack (10), at least selectively in partial areas of its surface dimension, preferably selectively in the vicinity of the chip (8), in corner areas (18) and/or in peripheral areas (19) of the layer stack (10), comprises a printed, electrically isolating stabilizing layer (4) and/or other reinforcing varnish layer (14) .

13. The security label according to any of the claims 1 to 12,
**characterized in that** the security label (20) comprises a support substrate (26) which supports and/or stabilizes the layer stack (10) in the vicinity of the chip (8) and has a surface dimension which amounts to at most 20 %, preferably at most 10 % of the surface dimension of the layer stack (10) .

14. A manufactured article (60) for preparing a plurality of security labels (20) according to any of the claims 1 to 13,
- the manufactured article (60) comprising an anti-stick coated, dividable first carrier substrate (61) available as a roll or sheet, a plurality of security labels (20) according to any of the claims 1 to 13 and one or more second carrier substrates (63),
- the security labels (20) being applied onto the first carrier substrate (61) with a first surface (10a) of their respective layer stack (10),
- the second carrier substrate(s) (63) being arranged on an opposite surface (10b) of the security labels (20) and/or of the layer stacks (10) and
- the release value and/or the separating force of the first surface (10a) of the respective security label (20) for peeling off from the first carrier substrate (61) is of different magnitude in relation to, in particular larger than the release value and/or separating force of the second surface (10b) of the respective security label (20) for peeling off from the second carrier substrate(s) (63).

15. A composite label (40), comprising
- a security label (20) according to any of the claims 1 to 13 and
- a further label (30) that has a punch contour or surface dimension which is different from that of the security label (20),
- the further label (30) comprising a label-associated, integrated label substrate (41), in particular an integrated label film, whereas the security label (20) in the major part of its surface area is formed without its own label substrate, and
- the security label (20) being permanently bonded to the further label (30).

## Revendications

1. Étiquette de sécurité (20) permettant de déceler des tentatives de manipulation frauduleuses,
sachant que l'étiquette de sécurité (20) comprend ce qui suit :
- une puce (8), en particulier une puce RFID (9), **caractérisée par**
- un empilement de couches (10) imprimé sujet à destruction, qui présente au moins une première couche de vernis (1) composée d'un vernis imprimé et au moins une couche de piste conductrice (2) imprimée structurée au moyen de laquelle est formée au moins une piste conductrice (2a) en contact électrique avec la puce (8) et/ou pouvant être couplée à la puce (8) de manière capacitive ou inductive est constituée,
- sachant que l'étiquette de sécurité (20) est constituée du moins dans la majeure partie de son extension surfacique comme étiquette ou étiquette partielle (21) dépourvue de substrat, de film et de papier et
- sachant que l'empilement de couches (10) sujet à destruction provoque, en cas de détachement du moins partiel d'un support ou d'un objet étiqueté avec celle-ci, une interruption, un endommagement et/ou une destruction irréversible, décelable électriquement, de l'au moins une piste conductrice (2a).

2. Étiquette de sécurité (20) selon la revendication 1,
**caractérisée en ce que** l'empilement de couches (10) imprimé sujet à destruction présente au moins une ou plusieurs couches dont la résistance à la déchirure et/ou la résistance à la séparation est si faible que, du fait de la faible résistance à la déchirure et/ou résistance à la séparation de l'étiquette de sécurité (20), l'au moins une piste conductrice (2a) soit interrompue, endommagée et/ou détruite en cas de détachement au moins partiel de l'empilement de couches (10).

3. Étiquette de sécurité selon la revendication 1 ou 2,
**caractérisée en ce que**, d'un côté (10b) de l'empilement de couches (10) et/ou de la puce (8), une couche d'adhésif (7) imprimée est contrecollée, laminée ou appliquée d'une autre manière.

4. Étiquette de sécurité selon la revendication 3,
**caractérisée en ce que** l'empilement de couches (10) présente, sur une surface (10a) ou une face de délimitation opposée à la couche d'adhésif (7), une couche (1 ; 11) imprimée dont la valeur Release (R1) et/ou la force de séparation par rapport à une couche antiadhésive, en particulier de silicone, est supérieure à la valeur Release (R2) et/ou la force de séparation de la couche d'adhésif (7) par rapport à une couche antiadhésive, en particulier de silicone.

5. Étiquette de sécurité selon la revendication 3 ou 4,
**caractérisée en ce que** l'empilement de couches (10) imprimé, sur une surface (10a) ou une face de délimitation d'une surface opposée à la couche d'adhésif (7), est plus difficilement enlevable d'une surface pourvue d'un revêtement antiadhésif, en particulier de silicone, que la couche d'adhésif (7), mais plus facilement enlevable d'une surface pourvue d'un revêtement antiadhésif que la couche d'adhésif (7) d'une surface non pourvue d'un revêtement antiadhésif.

6. Étiquette de sécurité selon l'une des revendications 1 à 5,
**caractérisée en ce que** l'empilement de couches (10) imprimé présente, d'un côté opposé à la puce (8), une surface (10a) et/ou une face de délimitation qui, après la distribution de l'étiquette de sécurité (20) sur un objet, est soit exposée à l'air, soit apposée sur l'objet ou sur une portion de surface (B) d'une étiquette supplémentaire (30), étiquette partielle ou étiquette supérieure (31) enroulée autour de l'objet.

7. Étiquette de sécurité selon l'une des revendications 1 à 6,
**caractérisée en ce que** l'étiquette de sécurité (20) est une étiquette ou étiquette partielle (21) confectionnée des deux côtés avec des substrats de support (61, 63) enlevables, en particulier avec des films de support enlevables, mais elle-même dépourvue de substrat, de film et de papier.

8. Étiquette de sécurité selon l'une des revendications 1 à 7,
**caractérisée en ce que** l'empilement de couches (10) imprimé de l'étiquette de sécurité (20) est une étiquette partielle (21) sujette à destruction et/ou souple par rapport à des forces de traction, des forces de pesanteur et/ou des contraintes de flexion, avec son propre contour d'estampage (22) .

9. Étiquette de sécurité selon l'une des revendications 1 à 8,
**caractérisée en ce que** l'étiquette de sécurité (20) et/ou l'empilement de couches (10) est une étiquette partielle (21) sujette à destruction qui est destinée à être distribuée en conjonction avec une étiquette supplémentaire (30), en particulier une étiquette supérieure (31).

10. Étiquette de sécurité selon l'une des revendications 1 à 9,
**caractérisée en ce que** la première couche de vernis (1) de l'empilement de couches (10) imprimé est une couche de vernis de transfert (11) et **en ce que** l'empilement de couches (10) imprimé présente, hormis l'au moins une couche de piste conductrice (2 ; 3) structurée, au moins encore une couche de vernis de stabilisation (4) et/ou une ou plusieurs couches de couleur d'impression (5, 6).

11. Étiquette de sécurité selon l'une des revendications 1 à 10,
**caractérisée en ce que** l'empilement de couches (10) imprimé sujet à destruction présente au moins une couche inhomogène ou un plan de couche inhomogène qui se compose de divers matériaux imprimés dans différentes zones de l'extension surfacique latérale de l'empilement de couches (10), sachant qu'un matériau électriquement conducteur sous forme d'au moins une piste conductrice (2a) est imprimé dans une première zone de surface (I) et un autre matériau, qui n'est pas ou plus conducteur, est imprimé dans au moins une deuxième zone de surface (II).

12. Étiquette de sécurité selon l'une des revendications 1 à 11,
**caractérisée en ce que** l'empilement de couches (10) imprimé présente, au moins sélectivement dans des zones partielles de son dimensionnement surfacique, de préférence sélectivement à proximité de la puce (8), dans des zones d'angle (18) et/ou dans des zones de marge (19) de l'empilement de couches (10), une couche de stabilisation (4) imprimée, isolante électriquement et/ou autre couche de vernis de renforcement (14).

13. Étiquette de sécurité selon l'une des revendications 1 à 12,
**caractérisée en ce que** l'étiquette de sécurité (20) présente un substrat de soutien (26) qui soutient et/ou stabilise l'empilement de couches (10) à proximité de la puce (8) et possède un dimensionnement surfacique qui est d'au plus 20 %, de préférence d'au plus 10 % du dimensionnement surfacique de l'empilement de couches (10).

14. Article de confection (60) destiné à confectionner une pluralité d'étiquettes de sécurité (20) selon l'une des revendications 1 à 13,
- sachant que l'article de confection (60) présente un premier substrat de support (61) pourvu d'un revêtement antiadhésif, divisible et disposé en rouleau ou en talon, une pluralité d'étiquettes de sécurité (20) selon l'une des revendications 1 à 13 et un ou plusieurs deuxièmes substrats de support (63),
- sachant que les étiquettes de sécurité (20) sont appliquées avec une première surface (10a) de leurs empilements de couches (10) respectifs sur le premier substrat de support (61),
- sachant que le ou les deuxièmes substrats de support (63) sont disposés sur une surface (10b) opposée des étiquettes de sécurité (20) et/ou des empilements de couches (10) et
- sachant que la valeur Release et/ou la force de séparation de la première surface (10a) de l'étiquette de sécurité (20) respective pour l'enlèvement à partir du premier substrat de support (61) est différente en comparaison à, en particulier supérieure à la valeur Release et/ou la force de séparation de la deuxième surface (10b) de l'étiquette de sécurité (20) respective pour l'enlèvement à partir de la ou des deuxièmes substrats de support (63).

15. Étiquette composite (40), comprenant
- une étiquette de sécurité (20) selon l'une des revendications 1 à 13 et
- une étiquette supplémentaire (30) qui possède un autre contour d'estampage ou un autre dimensionnement surfacique que l'étiquette de sécurité (20),
- sachant que l'étiquette supplémentaire (30) présente un substrat d'étiquette (41) intégré propre à l'étiquette, en particulier un film d'étiquette intégré, l'étiquette de sécurité (20) étant en revanche constituée dans la majeure partie de sa zone surfacique sans substrat d'étiquette propre, et
- sachant que l'étiquette de sécurité (20) est durablement collée avec l'étiquette supplémentaire (30).
